(19) Europäisches Patentamt
European Patent Office
Office européen des brevets

(11) **EP 4 472 095 A1**

(12) **EUROPEAN PATENT APPLICATION**
published in accordance with Art. 153(4) EPC

(43) Date of publication:
04.12.2024 Bulletin 2024/49

(51) International Patent Classification (IPC):
*H04B 7/0456* (2017.01)

(21) Application number: 23758874.4

(22) Date of filing: 03.01.2023

(86) International application number:
PCT/CN2023/070017

(87) International publication number:
WO 2023/160247 (31.08.2023 Gazette 2023/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.02.2022 CN 202210191609

(71) Applicant: Huawei Technologies Co., Ltd.
Shenzhen, Guangdong 518129 (CN)

(72) Inventors:
• ZHAO, Donghe
  Shenzhen, Guangdong 518129 (CN)
• QIAO, Tianjian
  Shenzhen, Guangdong 518129 (CN)
• SHEN, Junhui
  Shenzhen, Guangdong 518129 (CN)

(74) Representative: Pfenning, Meinig & Partner mbB
Patent- und Rechtsanwälte
Theresienhöhe 11a
80339 München (DE)

(54) **DOWNLINK TRANSMISSION METHOD AND APPARATUS**

(57) Embodiments of this application provide a transmission method and apparatus. The method includes: A first network device generates first information, where the first information indicates at least one codebook and a weighting coefficient matrix corresponding to the at least one codebook, and the at least one codebook and a weighting coefficient corresponding to the at least one codebook are used to determine a first beamforming matrix; and the first network device sends the first information to a second network device. Based on this application, the first network device sends the first information to the second network device instead of sending a beamforming matrix, so that an amount of data sent by the first network device to the second network device can be reduced.

FIG. 3

## Description

This application claims priority to Chinese Patent Application No. 202210191609.6, filed with the China National Intellectual Property Administration on February 28, 2022 and entitled "TRANSMISSION METHOD AND APPARATUS", which is incorporated herein by reference in its entirety.

## TECHNICAL FIELD

Embodiments of this application relate to the communications field, and more specifically, to a transmission method and apparatus.

## BACKGROUND

In a 5th generation (5th generation, 5G) communication system, as a bandwidth and a quantity of antennas increase, an amount of data communicated between a baseband unit (baseband unit, BU) and a radio unit (radio unit, RU) through a fronthaul interface increases by dozens of times. Even if the data communicated between the BU and the RU is compressed at a higher compression rate, the amount of data communicated between the BU and the RU may still reach 100 Gbps. To resolve the problem of a sharp increase in the amount of data over the fronthaul interface, the BU is divided into two parts in 5G: baseband high (baseband high, BBH) and baseband low (baseband low, BBL). The BBL is usually deployed in the RU or near the RU. The BBH and the BBL are connected through the fronthaul interface, and the BBH and the BBL separately implement different baseband processing functions, to reduce an amount of data communicated between the BBH and the BBL through the fronthaul interface.

In a massive multiple-input multiple-output (massive multiple-input multiple-output, massive MIMO) scenario, there is a requirement for communicating a beamforming matrix between the BBH and the BBL. Therefore, it is necessary to propose a method to communicate the beamforming matrix between the BBH and the BBL by using a small amount of data.

## SUMMARY

Embodiments of this application provide a transmission method and apparatus, to reduce an amount of data communicated between a first network device and a second network device.

According to a first aspect, a transmission method is provided, and the method includes: A first network device generates first information, where the first information indicates at least one codebook and a weighting coefficient matrix corresponding to the at least one codebook, and the at least one codebook and a weighting coefficient corresponding to the at least one codebook are used to determine a first beamforming matrix; and the first network device sends the first information to a second network device.

Based on the foregoing technical solution, the first network device sends, to the second network device, the first information indicating the at least one codebook and the weighting coefficient matrix corresponding to the at least one codebook, instead of sending a beamforming matrix, so that an amount of data sent by the first network device to the second network device can be reduced. For example, the first information may indicate the at least one codebook by using a codebook index, that is, the first information may include an index of the at least one codebook, and a data amount of the index of the at least one codebook is far less than a data amount of the entire beamforming matrix.

For example, the first network device is a control device, and the second network device is a radio frequency device; or the first network device is a radio frequency device, and the second network device is a control device. The radio frequency device has a baseband processing function. For example, the radio frequency device may be a BBL.

With reference to the first aspect, in some implementations of the first aspect, the first information indicates a column vector or a row vector included in the at least one codebook.

With reference to the first aspect, in some implementations of the first aspect, the at least one codebook includes a first codebook. For example, the first codebook is a spatial domain codebook.

With reference to the first aspect, in some implementations of the first aspect, the at least one codebook includes a first codebook and a second codebook. For example, the first codebook is a spatial domain codebook, and the second codebook is a frequency domain codebook.

With reference to the first aspect, in some implementations of the first aspect, the first beamforming matrix includes a first-stage matrix and a second-stage matrix, the at least one codebook includes the first codebook and a third codebook, the weighting coefficient matrix corresponding to the at least one codebook corresponds to the first codebook, the first codebook and the weighting coefficient matrix are used to determine the first-stage matrix, and the analog domain codebook is used to determine the second-stage matrix.

For example, the first codebook is a spatial domain codebook, and the third codebook is an analog domain codebook.

Based on the foregoing technical solution, the first information sent by the first network device to the second network device further indicates the third codebook, so that the second network device can determine the second-stage matrix based on the third codebook. Therefore, the second network device can perform secondary beamforming on a downlink transmission signal based on the second-stage matrix, to implement a more precise beam direction.

With reference to the first aspect, in some implementations of the first aspect, the first beamforming matrix includes a first-stage matrix and a second-stage matrix, the at least one codebook includes a first codebook, a second codebook, and a third codebook, the weighting coefficient matrix corresponding to the at least one codebook corresponds to the first codebook and the second codebook, the first codebook, the second codebook, and the weighting coefficient matrix are used to determine the first-stage matrix, and the third codebook is used to determine the second-stage matrix.

For example, the first codebook is a spatial domain codebook, the second codebook is a frequency domain codebook, and the third codebook is an analog domain codebook.

Based on the foregoing technical solution, the first information sent by the first network device to the second network device further indicates the third codebook, so that the second network device can determine the second-stage matrix based on the third codebook. Therefore, the second network device can perform secondary beamforming on downlink transmission based on the second-stage matrix, to implement a more precise beam direction.

With reference to the first aspect, in some implementations of the first aspect, the method further includes: The first network device determines, based on a second beamforming matrix and at least one codebook set, the at least one codebook and the weighting coefficient matrix corresponding to the at least one codebook, where the second beamforming matrix is determined based on one or more of the following: a beamforming matrix determined based on a sounding reference signal (sounding reference signal, SRS) measurement channel, a beamforming matrix determined based on a channel state information-reference signal (channel state information-reference signal, CSI-RS) measurement channel, a beamforming matrix determined based on a demodulation reference signal (demodulation reference signal, DMRS) measurement channel, and a static beamforming matrix.

With reference to the first aspect, in some implementations of the first aspect, that the first network device determines, based on a second beamforming matrix and at least one codebook set, the at least one codebook and the weighting coefficient matrix corresponding to the at least one codebook includes: The first network device projects the second beamforming matrix to the at least one codebook set, to obtain the at least one codebook and the weighting coefficient matrix corresponding to the at least one codebook that maximize a channel capacity and/or maximize a channel throughput.

Based on the foregoing technical solution, the first network device may determine the second beamforming matrix based on more of the foregoing beamforming matrices, and generate the first information based on the second beamforming matrix. Correspondingly, performance of the first beamforming matrix determined by the second network device based on the first information is better, so that downlink transmission performance can be improved.

With reference to the first aspect, in some implementations of the first aspect, the method further includes: The first network device determines, based on a first channel matrix and at least one codebook set, the at least one codebook and the weighting coefficient matrix corresponding to the at least one codebook, where the first channel matrix is determined based on one or more of the following: a channel matrix determined based on an SRS measurement channel, a channel matrix determined based on a CSI-RS measurement channel, and a channel matrix determined based on a DMRS measurement channel.

With reference to the first aspect, in some implementations of the first aspect, that the first network device determines, based on a first channel matrix and at least one codebook set, the at least one codebook and the weighting coefficient matrix corresponding to the at least one codebook includes: The first network device projects the first channel matrix to the at least one codebook set, to obtain the at least one codebook and the weighting coefficient matrix corresponding to the at least one codebook that maximize a channel capacity and/or maximize a channel throughput.

Based on the foregoing technical solution, the first network device may determine the first channel matrix based on more of the foregoing channel matrices, and generate the first information based on the first channel matrix. Correspondingly, performance of the first beamforming matrix determined by the second network device based on the first information is better, so that downlink transmission performance can be improved.

With reference to the first aspect, in some implementations of the first aspect, the at least one codebook set includes at least one of the following: a first codebook set, a second codebook set, and a third codebook set. For example, the first codebook set is a spatial domain codebook set, the second codebook set is a frequency domain codebook set, and the third codebook set is an analog domain codebook set.

With reference to the first aspect, in some implementations of the first aspect, the first network device is a control device, the second network device is a radio frequency device, and the method further includes: The first network device sends, to a third network device, information indicating the at least one codebook and the weighting coefficient matrix corresponding to the at least one codebook, where the third network device and the second network device belong to different cells.

The third network device is a control device or a radio frequency device.

Based on the foregoing technical solution, the first network device sends, to the third network device, the information indicating the at least one codebook and the weighting coefficient matrix corresponding to the at least one codebook, which helps implement multi-cell coordinated transmission. For example, if the third network device is a radio frequency device, the third network device may determine the first beamforming matrix based on the information indicating the at least one codebook and the weighting coefficient matrix corresponding to the at least one codebook, and determine a third beamforming matrix based on the first beamforming matrix. Therefore, when the third network device performs beamforming on a downlink transmission signal based on the third beamforming matrix, interference to a user served by the second network device can be avoided.

With reference to the first aspect, in some implementations of the first aspect, the first network device is a radio frequency device, the second network device is a control device, and the method further includes: The first network device performs beamforming on a signal by using the first beamforming matrix.

According to a second aspect, a transmission method is provided, and the method includes: A second network device receives first information from a first network device, where the first information indicates at least one codebook and a weighting coefficient matrix corresponding to the at least one codebook, and the at least one codebook and the weighting coefficient matrix corresponding to the at least one codebook are used to determine a first beamforming matrix; and the second network device determines, based on the first information, the at least one codebook and the weighting coefficient matrix corresponding to the at least one codebook.

Based on the foregoing technical solution, the first network device sends, to the second network device, the first information indicating the at least one codebook and the weighting coefficient matrix corresponding to the at least one codebook, instead of sending a beamforming matrix, so that an amount of data sent by the first network device to the second network device can be reduced. For example, the first information may indicate the at least one codebook by using a codebook index, that is, the first information may include an index of the at least one codebook, and a data amount of the index of the at least one codebook is far less than a data amount of the entire beamforming matrix.

For example, the first network device is a control device, and the second network device is a radio frequency device; or the first network device is a radio frequency device, and the second network device is a control device. The radio frequency device has a baseband processing function. For example, the radio frequency device may be a BBL.

With reference to the second aspect, in some implementations of the second aspect, the first information indicates a column vector or a row vector included in the at least one codebook.

With reference to the second aspect, in some implementations of the second aspect, the at least one codebook includes a first codebook. For example, the first codebook is a spatial domain codebook.

With reference to the second aspect, in some implementations of the second aspect, the at least one codebook includes a first codebook and a second codebook. For example, the first codebook is a spatial domain codebook, and the second codebook is a frequency domain codebook.

With reference to the second aspect, in some implementations of the second aspect, the first beamforming matrix includes a first-stage matrix and a second-stage matrix, the at least one codebook includes the first codebook and a third codebook, the weighting coefficient matrix corresponding to the at least one codebook corresponds to the first codebook, the first codebook and the weighting coefficient matrix are used to determine the first-stage matrix, and the third codebook is used to determine the second-stage matrix.

For example, the first codebook is a spatial domain codebook, and the third codebook is an analog domain codebook.

Based on the foregoing technical solution, the first information sent by the first network device to the second network device further indicates the third codebook, so that the second network device can determine the second-stage matrix based on the third codebook. Therefore, the second network device can perform secondary beamforming on downlink transmission based on the second-stage matrix, to implement a more precise beam direction.

With reference to the second aspect, in some implementations of the second aspect, the first beamforming matrix includes a first-stage matrix and a second-stage matrix, the at least one codebook includes the first codebook, a second codebook, and a third codebook, the weighting coefficient matrix corresponding to the at least one codebook corresponds to the first codebook and the second codebook, the first codebook, the second codebook, and the weighting coefficient matrix are used to determine the first-stage matrix, and the third codebook is used to determine the second-stage matrix.

For example, the first codebook is a spatial domain codebook, the second codebook is a frequency domain codebook, and the third codebook is an analog domain codebook.

Based on the foregoing technical solution, the first information sent by the first network device to the second network device further indicates the third codebook, so that the second network device can determine the second-stage matrix based on the third codebook. Therefore, the second network device can perform secondary beamforming on downlink transmission based on the second-stage matrix, to implement a more precise beam direction.

With reference to the second aspect, in some implementations of the second aspect, the first network device is a radio frequency device, the second network device is a control device, and the method further includes: The second network device sends, to a fourth network device, information indicating the at least one codebook and the weighting coefficient matrix corresponding to the at least one codebook, where the fourth network device and the first network device belong to different cells.

The fourth network device is a control device or a radio frequency device.

Based on the foregoing technical solution, the second network device sends, to the fourth network device, the information indicating the at least one codebook and the weighting coefficient matrix corresponding to the at least one codebook, which helps implement multi-cell coordinated transmission. For example, if the fourth network device is a radio frequency device, the fourth network device may determine the first beamforming matrix based on the information indicating the at least one codebook and the weighting coefficient matrix corresponding to the at least one codebook, and determine a fourth beamforming matrix based on the first beamforming matrix. Therefore, when the fourth network device performs beamforming on downlink transmission information based on the fourth beamforming matrix, interference to a user served by the first network device can be avoided.

With reference to the second aspect, in some implementations of the second aspect, the first network device is a control device, the second network device is a radio frequency device, and the method further includes: The second network device determines the first beamforming matrix based on the first information; and the second network device performs beamforming on a signal by using the first beamforming matrix.

According to a third aspect, a communication apparatus is provided. The communication apparatus includes a processing unit and a transceiver unit. The processing unit is configured to generate first information, where the first information indicates at least one codebook and a weighting coefficient matrix corresponding to the at least one codebook, and the at least one codebook and a weighting coefficient corresponding to the at least one codebook are used to determine a first beamforming matrix. The transceiver unit is configured to send the first information to a second network device.

With reference to the third aspect, in some implementations of the third aspect, the first information indicates a column vector or a row vector included in the at least one codebook.

With reference to the third aspect, in some implementations of the third aspect, the at least one codebook includes a first codebook.

With reference to the third aspect, in some implementations of the third aspect, the at least one codebook includes a first codebook and a second codebook.

With reference to the third aspect, in some implementations of the third aspect, the first beamforming matrix includes a first-stage matrix and a second-stage matrix, the at least one codebook includes the first codebook and a third codebook, the weighting coefficient matrix corresponding to the at least one codebook corresponds to the first codebook, the first codebook and the weighting coefficient matrix are used to determine the first-stage matrix, and the third codebook is used to determine the second-stage matrix.

With reference to the third aspect, in some implementations of the third aspect, the first beamforming matrix includes a first-stage matrix and a second-stage matrix, the at least one codebook includes a first codebook, a second codebook, and a third codebook, the weighting coefficient matrix corresponding to the at least one codebook corresponds to the first codebook and the second codebook, the first codebook, the second codebook, and the weighting coefficient matrix are used to determine the first-stage matrix, and the third codebook is used to determine the second-stage matrix.

With reference to the third aspect, in some implementations of the third aspect, the processing unit is further configured to determine, based on a second beamforming matrix and at least one codebook set, the at least one codebook and the weighting coefficient matrix corresponding to the at least one codebook, where the second beamforming matrix is determined based on one or more of the following: a beamforming matrix determined based on an SRS measurement channel, a beamforming matrix determined based on a CSI-RS measurement channel, a beamforming matrix determined based on a DMRS measurement channel, and a static beamforming matrix.

With reference to the third aspect, in some implementations of the third aspect, the processing unit is specifically configured to project the second beamforming matrix to the at least one codebook set, to obtain the at least one codebook and the weighting coefficient matrix corresponding to the at least one codebook that maximize a channel capacity and/or maximize a channel throughput.

With reference to the third aspect, in some implementations of the third aspect, the processing unit is further configured to determine, based on a first channel matrix and at least one codebook set, the at least one codebook and the weighting coefficient matrix corresponding to the at least one codebook, where the first channel matrix is determined based on one or more of the following: a channel matrix determined based on an SRS measurement channel, a channel matrix determined based on a CSI-RS measurement channel, and a channel matrix determined based on a DMRS measurement channel.

With reference to the third aspect, in some implementations of the third aspect, the processing unit is specifically configured to project the first channel matrix to the at least one codebook set, to obtain the at least one codebook and the weighting coefficient matrix corresponding to the at least one codebook that maximize a channel capacity and/or maximize a channel throughput.

With reference to the third aspect, in some implementations of the third aspect, the at least one codebook set includes at least one of the following: a first codebook set, a second codebook set, and a third codebook set.

With reference to the third aspect, in some implementations of the third aspect, the first codebook, the second codebook, or the third codebook is one of the following codebooks: a spatial domain codebook, a frequency domain codebook, or an analog domain codebook.

With reference to the third aspect, in some implementations of the third aspect, the transceiver unit is further configured to send, to a third network device, information indicating the at least one codebook and the weighting coefficient matrix corresponding to the at least one codebook, where the third network device and the second network device belong to different cells.

With reference to the third aspect, in some implementations of the third aspect, the processing unit is further configured to perform beamforming on a signal by using the first beamforming matrix.

According to a fourth aspect, a communication apparatus is provided. The communication apparatus includes a transceiver unit and a processing unit. The transceiver unit is configured to receive first information from a first network device, where the first information indicates at least one codebook and a weighting coefficient matrix corresponding to the at least one codebook, and the at least one codebook and the weighting coefficient matrix corresponding to the at least one codebook are used to determine a first beamforming matrix. The processing unit is configured to determine, based on the first information, the at least one codebook and the weighting coefficient matrix corresponding to the at least one codebook.

With reference to the fourth aspect, in some implementations of the fourth aspect, the first information indicates a column vector or a row vector included in the at least one codebook.

With reference to the fourth aspect, in some implementations of the fourth aspect, the at least one codebook includes a first codebook.

With reference to the fourth aspect, in some implementations of the fourth aspect, the at least one codebook includes a first codebook and a second codebook.

With reference to the fourth aspect, in some implementations of the fourth aspect, the first beamforming matrix includes a first-stage matrix and a second-stage matrix, the at least one codebook includes the first codebook and a third codebook, the weighting coefficient matrix corresponding to the at least one codebook corresponds to the first codebook, the first codebook and the weighting coefficient matrix are used to determine the first-stage matrix, and the third codebook is used to determine the second-stage matrix.

With reference to the fourth aspect, in some implementations of the fourth aspect, the first beamforming matrix includes a first-stage matrix and a second-stage matrix, the at least one codebook includes the first codebook, a second codebook, and a third codebook, the weighting coefficient matrix corresponding to the at least one codebook corresponds to the first codebook and the second codebook, the first codebook, the second codebook, and the weighting coefficient matrix are used to determine the first-stage matrix, and the third codebook is used to determine the second-stage matrix.

With reference to the fourth aspect, in some implementations of the fourth aspect, the first codebook, the second codebooks, or the third codebook is one of the following codebooks: a spatial domain codebook, a frequency domain codebook, or an analog domain codebook.

With reference to the fourth aspect, in some implementations of the fourth aspect, the transceiver unit is further configured to send the first information to a fourth network device, where the fourth network device and the first network device belong to different cells.

With reference to the fourth aspect, in some implementations of the fourth aspect, the processing unit is further configured to determine the first beamforming matrix based on the first information; and the processing unit is further configured to perform beamforming on a signal by using the first beamforming matrix.

According to a fifth aspect, an apparatus is provided, including a processor. The processor is coupled to a memory, and may be configured to execute instructions in the memory, to implement the method in any one of the first aspect and the possible implementations of the first aspect. Optionally, the apparatus further includes the memory. Optionally, the apparatus further includes a communication interface, and the processor is coupled to the communication interface.

In an implementation, the apparatus is a first network device. When the apparatus is the first network device, the communication interface may be a transceiver or an input/output interface.

In another implementation, the apparatus is a chip or a chip system configured in the first network device. When the apparatus is the chip configured in the first network device, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to a sixth aspect, a communication apparatus is provided, including a processor. The processor is coupled to a memory, and may be configured to execute instructions in the memory, to implement the method in any one of the second aspect and the possible implementations of the second aspect. Optionally, the apparatus further includes the memory. Optionally, the apparatus further includes a communication interface, and the processor is coupled to the communication interface.

In an implementation, the apparatus is a second network device. When the apparatus is the second network device, the communication interface may be a transceiver or an input/output interface.

In another implementation, the apparatus is a chip or a chip system configured in the first network device. When the apparatus is the chip configured in the first network device, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to a seventh aspect, this application provides a processor, including an input circuit, an output circuit, and a processing circuit. The processing circuit is configured to: receive a signal through the input circuit, and transmit a signal through the output circuit, so that the processor performs the methods in the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, and a signal output by the output circuit may be output to, for example, but not limited to, a transmitter and transmitted by the transmitter. In addition, the input circuit and the output circuit may be a same circuit, and the circuit separately serves as the input circuit and the output circuit at different moments. Specific implementations of the processor and the various circuits are not limited in this embodiment of this application.

According to an eighth aspect, this application provides a processing apparatus, including a communication interface and a processor. The communication interface is coupled to the processor. The communication interface is configured to input and/or output information. The information includes at least one of instructions or data. The processor is configured to execute a computer program, so that the processing apparatus performs the methods in the foregoing aspects.

According to a ninth aspect, this application provides a processing apparatus, including a processor and a memory. The processor is configured to: read instructions stored in the memory, receive a signal by using a receiver, and transmit a signal by using a transmitter, so that the processing apparatus performs the methods in the foregoing aspects.

Optionally, there are one or more processors. If there is a memory, there may also be one or more memories.

Optionally, the memory may be integrated with the processor, or the memory is disposed separated from the processor.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner of disposing the memory and the processor are not limited in this embodiment of this application.

It should be understood that a related information exchange process, for example, sending first information, may be a process of outputting the first information by the processor, and receiving the first information may be a process of inputting the received first information to the processor. Specifically, information output by the processor may be output to the transmitter, and input information received by the processor may be from the receiver. The transmitter and the receiver may be collectively referred to as a transceiver.

The apparatuses in the eighth aspect and the ninth aspect may be chips or chip systems. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor, and exist independently.

According to a tenth aspect, this application provides a computer program product. The computer program product includes a computer program (which may also be referred to as code or instructions). When the computer program is run, a computer is enabled to perform the methods in the foregoing aspects.

According to an eleventh aspect, this application provides a computer-readable storage medium. The computer-readable storage medium stores a computer program (which may also be referred to as code or instructions). When the computer program is run on a computer, the computer is enabled to perform the methods in the foregoing aspects.

According to a twelfth aspect, this application provides a system, including the foregoing first network device and second network device.

**BRIEF DESCRIPTION OF DRAWINGS**

FIG. 1 is a schematic diagram of a system applicable to a method according to an embodiment of this application;
FIG. 2 is a schematic diagram of a structure of a network device according to an embodiment of this application;
FIG. 3 is a schematic flowchart of a method according to an embodiment of this application;

FIG. 4 is a schematic diagram of a method according to an embodiment of this application;

FIG. 5 is a schematic block diagram of an apparatus according to an embodiment of this application;

FIG. 6 is a schematic diagram of a structure of an apparatus according to an embodiment of this application; and

FIG. 7 is a schematic diagram of a chip system according to an embodiment of this application.

## DESCRIPTION OF EMBODIMENTS

The following describes the technical solutions in embodiments of this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a worldwide interoperability for microwave access (worldwide interoperability for microwave access, WiMAX) communication system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. Alternatively, the communication system may be a public land mobile network (public land mobile network, PLMN), a device-to-device (device-to-device, D2D) communication system, a machine-to-machine (machine-to-machine, M2M) communication system, an Internet of Things (Internet of Things, IoT) communication system, a vehicle-to-everything (vehicle-to-everything, V2X) communication system, an uncrewed aerial vehicle (uncrewed aerial vehicle, UAV) communication system, or another communication system.

In the descriptions of this application, "/" represents an "or" relationship between associated objects unless otherwise specified. For example, A/B may represent A or B. The term "and/or" in this application represents only an association relationship for describing associated objects and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. At least one of the following items (pieces) or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or technical solution described as "example" or "for example" in embodiments of this application should not be explained as being more preferred or having more advantages than another embodiment or design solution. Exactly, use of the word such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

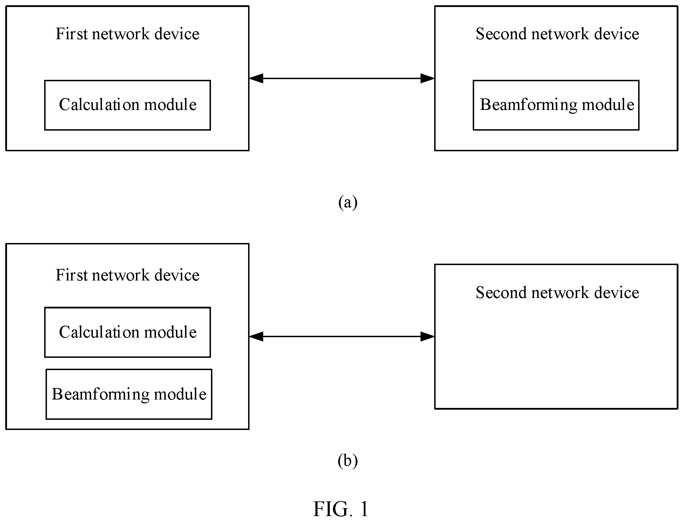

For ease of understanding of embodiments of this application, an application scenario of embodiments of this application is first described in detail with reference to FIG. 1.

FIG. 1 is a system architecture applicable to a method according to an embodiment of this application. As shown in FIG. 1, the system includes a first network device and a second network device. The first network device and the second network device are connected by using a first interface. The first interface may be any one of the following interfaces: a common public radio interface (common public radio interface, CPRI), an enhanced CPRI (enhanced CPRI, eCPRI) interface, or an interface defined in the future for connecting two network devices. For example, the first interface may be referred to as a fronthaul (fronthaul) interface.

For example, the first network device is a control device, and the second network device is a radio frequency device. As shown in (a) in FIG. 1, a calculation module is deployed on the first network device. The calculation module is configured to calculate a beamforming matrix, and the first network device may send the beamforming matrix to the second network device by using the first interface. A beamforming module is deployed on the second network device, and the beamforming module is configured to perform beamforming on a to-be-sent signal based on the beamforming matrix. For another example, the first network device is a radio frequency device, and the second network device is a control device. As shown in (b) in FIG. 1, a calculation module and a beamforming module are deployed on the first network device. The calculation module is configured to calculate a beamforming matrix, and the beamforming module is configured to perform beamforming on a to-be-sent signal based on the beamforming matrix. In a multi-cell coordination scenario, the first network device may send the beamforming matrix to the second network device by using the first interface. Correspondingly, after receiving the beamforming matrix from the first network device, the second network device may send the beamforming matrix to a third network device. The third network device is a radio frequency device or a control device, and the third network device and the first network device belong to different cells.

The control device may serve as a primary device of a base station, and provides a function of processing a baseband signal, for example, provides a baseband high (baseband high, BBH) function, and/or provides control and management of functions of devices of the base station. For example, in a downlink direction, the BBH may have one or more functions of coding (coding), rate matching (rate matching), scrambling (scrambling), modulation (modulation), and layer mapping (layer mapping). In an uplink direction, the BBH may have one or more functions of decoding (decoding), rate de-matching (rate de-matching), de-scrambling (de-scrambling), de-modulation (de-modulation), and channel estimation (channel estimation)/equalization (equalization). For example, the control device may be a baseband unit (baseband unit, BU or BBU), a central unit (central unit, CU), a distributed unit (distributed unit, DU), or the like.

In some deployments, the control device may include a CU and a DU, where the DU is connected to a radio frequency device by using the first interface. Further, the CU may use an architecture in which a control plane (control plane, CP) and a user plane (user plane, UP) are separated. In other words, the CU may include a CU-CP entity and a CU-UP entity.

The radio frequency device may serve as a radio frequency module of a base station, and may be configured to process an intermediate frequency signal and/or a radio frequency signal, or may be configured to receive and transmit a radio signal. The radio frequency device may be further configured to provide a function of processing some baseband signals, for example, provide a baseband low (baseband low, BBL) function. For example, in a downlink direction, the BBL may have one or more functions of resource mapping (resource element mapping), digital beamforming (digital beamforming, DBF), inverse fast Fourier transformation (inverse fast Fourier transformation, IFFT) and cyclic prefix addition (cyclic prefix addition), analog beamforming (analog beamforming, ABF), and analog-to-digital (analog-to-digital) conversion. In an uplink direction, the BBL may have one or more functions of fast Fourier transformation (fast Fourier transformation, FFT) and cyclic prefix removal (cyclic prefix removal), analog beamforming, analog-to-digital conversion, digital beamforming, and resource de-mapping (resource element de-mapping). For example, the radio frequency device may be a radio unit (radio unit, RU), a remote radio unit (remote radio unit, RRU), an active antenna unit (active antenna unit, AAU), or the like.

As described above, the first network device may send the beamforming matrix to the second network device by using the first interface. A dimension of the beamforming matrix may be: a quantity of antennas×a quantity of subbands×a quantity of transport layers. Alternatively, when the quantity of antennas is 1, the dimension of the beamforming matrix may be: the quantity of subbands×the quantity of transport layers; when the quantity of subbands is 1, the dimension of the beamforming matrix may be: the quantity of antennas×the quantity of transmission layers; or when the quantity of transport layers is 1, the dimension of the beamforming matrix may be: the quantity of antennas×the quantity of subbands. Therefore, when the quantity of antennas, the quantity of subbands, or the quantity of transport layers is large, a large amount of bandwidth is occupied when the beamforming matrix is transmitted by using the first interface.

In view of this, embodiments of this application provide a transmission method, to reduce an amount of data communicated between a first network device and a second network device.

To facilitate understanding of embodiments of this application, the following briefly describes terms in embodiments of this application.

1. Beamforming (beamforming) technology: The beamforming technology may also be referred to as a precoding technology. A network device may determine, based on known or estimated channel information, a beamforming matrix that matches a channel state, to process a to-be-sent signal, so that the to-be-sent signal on which beamforming is performed adapts to a channel, and a signal receiving device obtains better signal receiving quality, for example, obtains a higher signal to interference plus noise ratio (signal to interference plus noise ratio, SINR). Therefore, when the beamforming technology is used, a sending device and a plurality of receiving devices can transmit signals on a same time-frequency resource, that is, multi-user multiple-input multiple-output (multi-user multiple-input multiple-output, MU-MIMO) is implemented.

2. Spatial domain vector (spatial domain vector): The spatial domain vector may also be referred to as an angle vector, a digital beam (digital beam) vector, a spatial domain beam base vector, a spatial domain base vector, or the like. Elements in the spatial domain vector may represent weights of radio frequency channels. Based on the weights that are of the radio frequency channels and that are represented by the elements in the spatial domain vector, signals on the radio frequency channels are linearly superimposed, so that an area with a strong signal can be formed in a specific direction in space. A dimension of the spatial domain vector may be $N_{trx} \times 1$, where $N_{trx}$ represents a quantity of radio frequency channels.

Optionally, the spatial domain vector is any one of the following vectors: a discrete Fourier transform (discrete Fourier transform, DFT) vector, a conjugate transposition vector of the DFT vector, an oversampling DFT vector, and a conjugate transposition vector of the oversampling DFT vector. The DFT vector may be a vector in a DFT matrix, the conjugate transposition vector of the DFT vector may be a column vector in a conjugate transposition matrix of the DFT matrix, and the oversampling DFT vector may be a vector in an oversampling DFT matrix.

In a possible design, the spatial domain vector may be, for example, a two-dimensional (2 dimensions, 2D)-DFT vector $\mathbf{v}_{l,m}$ defined in a type II (type II) codebook in the NR protocol technical specification (technical specification, TS) 38.214 release 15 (release 15, R15). In other words, the spatial domain vector may be a 2D-DFT vector or an oversampling 2D-DFT vector. For brevity, detailed description of the 2D-DFT vector is omitted herein.

3. Frequency domain vector (frequency domain vector): The frequency domain vector is also referred to as a frequency domain base vector. The frequency domain vector may be a vector used to represent a change rule of a channel in frequency domain, or the frequency domain vector may be a vector used to represent a frequency domain feature of a channel, or the frequency domain vector may be a vector used to resist a change of a channel in frequency domain. Each frequency domain vector may represent one change rule. When a signal is transmitted through a radio channel, the signal may reach a receive antenna from a transmit antenna through a plurality of paths. A multipath delay causes frequency selective fading, which is equivalent to a change of a channel in frequency domain. Different frequency domain vectors may be used to represent change rules of a channel in frequency domain that are caused by delays on different transmission paths. A dimension of the frequency domain vector may be $N_f \times 1$, where $N_\varepsilon$ represents a quantity of frequency domain units.

Optionally, the frequency domain vector is any one of the following vectors: a DFT vector, a conjugate transposition vector of the DFT vector, an oversampling DFT vector, a conjugate transposition vector of the oversampling DFT vector, a discrete cosine transform (discrete cosine transform, DCT) vector, a conjugate transposition vector of the DCT vector, an oversampling DCT vector, and a conjugate transposition vector of the oversampling DCT vector. For example, the frequency domain vector may be a DFT vector defined in a type II in NR TS 38.214 R15.

4. Analog beam vector: Elements in the analog beam vector may represent weights of antenna elements. Based on the weights that are of the antenna elements and that are represented by the elements in the analog beam vector, signals of the antenna elements are linearly superimposed, so that an area with a strong signal can be formed in a specific direction in space. It should be noted that, in embodiments of this application, the antenna element is an antenna element connected to a phase shifter in an analog domain, and different antenna elements are connected to different phase shifters in the analog domain. A dimension of a spatial domain vector may be $N_{ant} \times 1$, where $N_{ant}$ represents a quantity of antenna elements.

Optionally, the analog domain beam vector is any one of the following vectors: a DFT vector, a conjugate transposition vector of the DFT vector, an oversampling DFT vector, and a conjugate transposition vector of the oversampling DFT vector.

5. Spatial domain codebook and spatial domain codebook set:

The spatial domain codebook represents a spatial domain vector set including L spatial domain vectors, where L is a positive integer. It may be understood that, when the spatial domain codebook includes one spatial domain vector, the spatial domain codebook may also be referred to as a spatial domain vector. It may be further understood that, the spatial domain codebook may also be represented in a form of a matrix. For example, if the spatial domain vector is a column vector, the L spatial domain vectors may be sequentially arranged from left to right to obtain a spatial domain codebook in a matrix form, or conjugate transpositions of the L spatial domain vectors may be sequentially arranged from top to bottom to obtain a spatial domain codebook in a matrix form. It may be further understood that, the spatial domain codebook may also be represented in a form of a vector. For example, if the spatial domain vector is a column vector, the L spatial domain vectors may be sequentially arranged from top to bottom to obtain a spatial domain codebook in a vector form.

The spatial domain codebook set represents a spatial domain vector set including L' spatial domain vectors, where L' is an integer greater than or equal to L. In a possible design, the spatial domain codebook set includes $N_{trx}$ spatial domain vectors (that is, $L'=N_{trx}$), every two of the $N_{trx}$ spatial domain vectors may be orthogonal to each other, and $N_{trx}$ represents a quantity of radio frequency channels. In another possible design, the $N_{trx}$ spatial domain vectors included in the spatial domain codebook set may be expanded to $(O_s \times N_{trx})$ spatial domain vectors by using an oversampling factor $O_s$. In this case, the spatial domain codebook set may include $O_s$ subsets, and each subset may include $N_{trx}$ spatial domain vectors. Every two of the $N_{trx}$ spatial domain vectors in each subset may be orthogonal to each other.

The spatial domain codebook set may also represent a set including X spatial domain codebooks, where X is a positive integer. Each spatial domain codebook includes one or more of the L' spatial domain vectors.

6. Frequency domain codebook and frequency domain codebook set:

The frequency domain codebook represents a frequency domain vector set including M frequency domain vectors, where M is a positive integer. It may be understood that, when the frequency domain codebook includes one frequency domain vector, the frequency domain codebook may also be referred to as a frequency domain vector. It may be further understood that, the frequency domain codebook may also be represented in a form of a matrix. For example, if the frequency domain vector is a column vector, the M frequency domain vectors may be sequentially arranged from left to right to obtain a frequency domain codebook in a matrix form, or conjugate transpositions of the M frequency domain vectors may be sequentially arranged from top to bottom to obtain a frequency domain codebook in a matrix form. It may be further understood that, the frequency domain codebook may also be represented in a form of a vector. For example, if the frequency domain vector is a column vector, the M frequency domain vectors may be sequentially arranged from top to bottom to obtain a frequency domain codebook in a vector form.

The frequency domain codebook set represents a frequency domain vector set including M' frequency domain vectors, where M' is an integer greater than or equal to M. In a possible design, the frequency domain codebook set includes $N_\varepsilon$ spatial domain vectors (that is, $M'=N_f$), every two of the $N_\varepsilon$ frequency domain vectors may be orthogonal to each other, and $N_\varepsilon$ represents a quantity of frequency domain units. In another possible design, the $N_\varepsilon$ frequency domain vectors included in the frequency domain codebook set may be expanded to $(O_f \times N_f)$ frequency domain vectors by using an oversampling factor $O_f$. In this case, the frequency domain codebook set may include Of subsets, and each subset may include $N_\varepsilon$ frequency domain vectors. Every two of the $N_\varepsilon$ frequency domain vectors in each subset may be orthogonal to each other.

7. Analog domain codebook and analog domain codebook set:

The analog domain codebook represents an analog beam vector set including B analog beam vectors, where B is a positive integer. It may be understood that, when the analog domain codebook includes one analog beam vector, the analog domain codebook may also be referred to as an analog domain vector. It may be further understood that, the analog domain codebook may also be represented in a form of a matrix. For example, if the analog beam vector is a column vector, the B analog beam vectors may be sequentially arranged from left to right to obtain an analog domain codebook in a matrix form, or conjugate transpositions of the B analog beam vectors may be sequentially arranged from left to right to obtain an analog domain codebook in a matrix form. It may be further understood that, the analog domain codebook may also be represented in a form of a vector. For example, if the analog beam vector is a column vector, the B analog beam vectors may be sequentially arranged from top to bottom to obtain an analog domain codebook in a vector form.

The analog domain codebook set represents an analog beam vector set including B' analog beam vectors, where B' is an integer greater than or equal to B. In a possible design, the analog domain codebook set includes $N_{ant}$ analog beam vectors (that is, $B'=N_{ant}$), every two of the $N_{ant}$ analog beam vectors may be orthogonal to each other, and $N_{ant}$ represents a quantity of antenna elements.

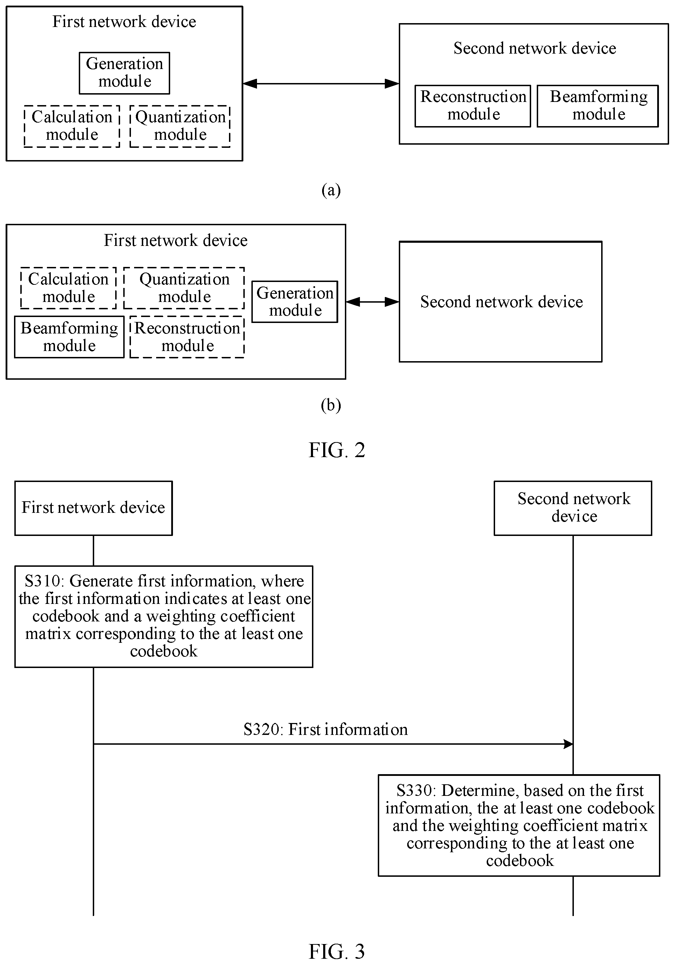

The following describes schematic diagrams of structures of a first network device and a second network device according to an embodiment of this application with reference to FIG. 2.

In a possible implementation, the first network device is a control device, and the second network device is a radio frequency device. The first network device may include a generation module configured to generate first information. The first information indicates at least one codebook and a weighting coefficient matrix corresponding to the at least one codebook, and the at least one codebook and the weighting coefficient matrix corresponding to the at least one codebook are used to determine a first beamforming matrix. Optionally, as shown in (a) in FIG. 2, the first network device may further include a calculation module and a quantization module. The calculation module is configured to calculate a second beamforming matrix or a first channel matrix. The quantization module is configured to determine, based on the second beamforming matrix or the first channel matrix, the at least one codebook and the weighting coefficient matrix corresponding to the at least one codebook. The at least one codebook and the weighting coefficient matrix corresponding to the at least one codebook are used to determine the first beamforming matrix. For more descriptions of functions of the calculation module and the quantization module, refer to descriptions in the following method 300. The first network device may be further configured to send the first information to the second network device by using a first interface. The second network device may include a reconstruction module and a beamforming module. The reconstruction module is configured to determine the first beamforming matrix based on the first information. The beamforming module is configured to perform beamforming on a to-be-sent signal based on the first beamforming matrix. For more descriptions of functions of the reconstruction module and the beamforming module, refer to descriptions in the following method 300.

The first network device and the second network device belong to a same cell, or belong to different cells. This is not limited in this embodiment of this application. The second beamforming matrix is obtained by measuring a channel, and the first beamforming matrix is determined based on the first information. The first beamforming matrix is the same as or similar to the second beamforming matrix, or the first beamforming matrix is used to reconstruct or approximate the second beamforming matrix.

For example, the generation module included in the first network device is configured to generate the first information based on second information received from a network device #A, where the second information indicates at least one codebook and a weighting coefficient matrix corresponding to the at least one codebook. For example, that the first network device generates the first information means that the first network device directly uses the second information as the first information. For another example, that the first network device generates the first information means the following: The first network device determines, based on the second information, the at least one codebook and the weighting coefficient matrix corresponding to the at least one codebook, and then determines the first information based on the at least one codebook and the weighting coefficient matrix corresponding to the at least one codebook. The network device #A is a control device or a radio frequency device.

For another example, the first network device is configured to generate the first information based on the second beamforming matrix or the first channel matrix. As shown in (a) in FIG. 2, the first network device may include the calculation module and the quantization module. The calculation module is configured to calculate the second beamforming matrix or the first channel matrix. The quantization module is configured to generate the first information based on the second beamforming matrix or the first channel matrix. For more descriptions of functions of the calculation module and the quantization module, refer to descriptions in the following method 300.

Optionally, the first network device may further send, to a third network device, the first information or information indicating the at least one codebook and the weighting coefficient matrix corresponding to the at least one codebook. The third network device is a control device or a radio frequency device, and the third network device and the second network device belong to different cells.

In another possible implementation, the first network device is a radio frequency device, and the second network device is a control device. The first network device includes a module configured to generate the first information, for example, a generation module. The first network device may send the first information to the second network device by using the first interface. Correspondingly, after receiving the first information from the first network device, the second network device may send, to a fourth network device, the first information or information indicating the at least one codebook and the weighting coefficient matrix corresponding to the at least one codebook. The fourth network device may be a radio frequency device or a control device, and the fourth network device and the first network device belong to different cells.

For example, the generation module included in the first network device is configured to generate the first information based on second information received from a network device #A, where the second information indicates at least one codebook and a weighting coefficient matrix corresponding to the at least one codebook. For example, that the first network device generates the first information means that the first network device directly uses the second information as the first information. For another example, that the first network device generates the first information means the following: The first network device determines, based on the second information, the at least one codebook and the weighting coefficient matrix corresponding to the at least one codebook, and then determines the first information based on the at least one codebook and the weighting coefficient matrix corresponding to the at least one codebook. The network device #A is a control device or a radio frequency device.

For another example, the first network device is configured to generate the first information based on the second beamforming matrix or the first channel matrix. As shown in (b) in FIG. 2, the first network device may include a calculation module, a quantization module, and a beamforming module. The calculation module is configured to calculate the second beamforming matrix or the first channel matrix. The beamforming module is configured to perform beamforming on a to-be-sent signal based on the second beamforming matrix. The quantization module is configured to generate the first information based on the second beamforming matrix or the first channel matrix.

Optionally, the first network device further includes a reconstruction module. In a multi-cell coordination scenario, the second network device may receive third information from a network device #B. The third information indicates at least one codebook and a weighting coefficient corresponding to the at least one codebook, and the at least one codebook and the weighting coefficient corresponding to the at least one codebook are used to determine a beamforming matrix #A. Further, the second network device sends, to the first network device by using the first interface, information indicating the at least one codebook and the weighting coefficient corresponding to the at least one codebook. Correspondingly, the reconstruction module included in the first network device is configured to determine the beamforming matrix #A based on the at least one codebook and the weighting coefficient corresponding to the at least one codebook. Further, the calculation module included in the first network device is configured to calculate the second beamforming matrix based on the beamforming matrix #A, so that when the second network device performs beamforming on a downlink transmission signal based on the second beamforming matrix, interference to a user served by the network device #B can be avoided. The network device #B may be a control device, and the network device #B and the first network device belong to different cells.

With reference to FIG. 3, the following describes a transmission method provided in embodiments of this application. FIG. 3 is a schematic flowchart of a transmission method according to an embodiment of this application. The following describes in detail steps included in a method 300.

S310: A first network device generates first information.

The first information indicates at least one codebook and a weighting coefficient matrix corresponding to the at least one codebook, the at least one codebook and the weighting coefficient matrix corresponding to the at least one codebook are used to determine a first beamforming matrix, and the first beamforming matrix is used to perform beamforming on a downlink transmission signal.

In a possible implementation, the at least one codebook includes a first codebook, and the weighting coefficient matrix corresponding to the at least one codebook includes a weighting coefficient matrix corresponding to the first codebook. In other words, the first information indicates the first codebook and the weighting coefficient matrix corresponding to the first codebook. The first codebook may be a spatial domain codebook. The following uses an example in which the first codebook is a spatial domain codebook for description. Optionally, the first codebook may alternatively be other codebooks having different names or meanings. This is not limited in this application.

For example, the spatial domain codebook may be indicated by using an index, that is, the first information includes an index of the spatial domain codebook.

For another example, the spatial domain codebook may be indicated by using a first bitmap. A quantity of bits included in the first bitmap, or a length of the first bitmap, may be a quantity of spatial domain codebooks included in a spatial domain codebook set, and each bit included in the first bitmap corresponds to one spatial domain codebook in the spatial domain codebook set. For example, when a bit indicates "0", it may be considered that a spatial domain codebook corresponding to the bit is not selected; or when a bit indicates " 1", it may be considered that a spatial domain codebook corresponding to the bit is selected, or in other words, the spatial domain codebook corresponding to the bit is a spatial domain codebook indicated by the first information.

For another example, the spatial domain codebook may be indicated by using an index of a spatial domain vector included in the spatial domain codebook, that is, the first information includes indexes of L spatial domain vectors included in the spatial domain codebook. In other words, the first information may indicate L spatial domain vectors, and the L spatial domain vectors may form the spatial domain codebook. It should be noted that, the L spatial domain vectors included in the spatial domain codebook may be L row vectors in the spatial domain codebook, or may be L column vectors in the spatial domain codebook.

Optionally, when the L spatial domain vectors are the L row vectors in the spatial domain codebook, the first information further indicates $N_{trx}$ column vectors included in the spatial domain codebook; or when the L spatial domain vectors are the L column vectors in the spatial domain codebook, the first information further indicates $N_{trx}$ row vectors included in the spatial domain codebook.

For another example, the spatial domain codebook may be indicated by using a second bitmap. A quantity of bits included in the second bitmap, or a length of the second bitmap, may be a quantity of spatial domain vectors included in a spatial domain codebook set, and each bit included in the second bitmap corresponds to one spatial domain vector in the spatial domain codebook set. For example, when a bit indicates "0", it may be considered that a spatial domain vector corresponding to the bit is not selected; or when a bit indicates "1", it may be considered that a spatial domain vector corresponding to the bit is selected, or in other words, the spatial domain vector corresponding to the bit is a spatial domain vector that is included in the spatial domain codebook and that is indicated by the first information.

For example, a weighting coefficient matrix corresponding to a spatial domain codebook may include weighting coefficients corresponding to L spatial domain vectors. For example, the weighting coefficient matrix includes L columns, and the L columns are in a one-to-one correspondence with the L spatial domain vectors; or the weighting coefficient matrix includes L rows, and the L rows are in a one-to-one correspondence with the L spatial domain vectors. Optionally, the weighting coefficient matrix corresponding to the spatial domain codebook may refer to a broadband amplitude coefficient matrix. Further, the weighting coefficient matrix corresponding to the spatial domain codebook may further include a subband coefficient matrix, and each subband coefficient included in the subband coefficient matrix includes a subband amplitude coefficient and a subband phase coefficient. For example, when the weighting coefficient corresponding to the spatial domain codebook includes a broadband amplitude coefficient matrix, a subband amplitude coefficient matrix, and a subband phase coefficient matrix, the weighting coefficient matrix corresponding to the spatial domain codebook may be represented as $[a_0\ a, ... \ a_{L-1}][b_0\ b_1\ ...\ b_{L-1}]^T$, where $[a_0\ a_1\ ...\ a_{L-1}]$ represents the broadband amplitude coefficient matrix, $[b_0\ b_1\ ...\ b_{L-1}]^T$ represents a transposition of the subband coefficient matrix $[b_0\ b_1\ \cdots\ b_{L-1}]$, and $b_0$ to $b_{L-1}$ may respectively include subband amplitude coefficients $\alpha_0$ to $\alpha_{L-1}$ and subband phase coefficients $\phi_0$ to $\phi_{L-1}$. The broadband amplitude coefficient and the spatial domain codebook are used to determine a first beamforming matrix corresponding to a broadband, and the broadband amplitude coefficient, the subband coefficient, and the spatial domain codebook are used to determine a first beamforming matrix corresponding to each subband included in the broadband. The first beamforming matrix corresponding to the broadband is used to perform beamforming on a signal transmitted on one or more subbands included in the broadband. If the first beamforming matrix corresponding to each subband included in the broadband is determined, the first beamforming matrix corresponding to the subband is used to perform beamforming on a signal transmitted on the subband.

For example, the weighting coefficient matrix corresponding to the spatial domain codebook may be indicated in a normalization manner.

Assuming that the weighting coefficient matrix includes L rows of coefficients corresponding to the L spatial domain vectors, the first network device may separately perform a modulo operation on the L rows of coefficients to determine a row of coefficients with a maximum modulus. Further, the first network device normalizes the row of coefficients with the maximum modulus, calculates relative values of the remaining (L-1) rows of coefficients relative to the row of coefficients with the maximum modulus, and indicates the relative values of the (L-1) rows of coefficients relative to the row of coefficients with the maximum modulus by using quantized information. For the row of coefficients with the maximum modulus, a location of the row of coefficients with the maximum modulus may be indicated, for example, the row of coefficients with the maximum modulus is which row in the L rows of coefficients.

It should be understood that, indicating the weighting coefficient matrix in a normalization manner is merely a possible implementation, and should not constitute any limitation on this application. For example, the first network device may directly indicate an index of a quantized value of each weighting coefficient in the weighting coefficient matrix, or indicate each weighting coefficient in the weighting coefficient matrix in a differential manner.

It should be noted that, in this embodiment of this application, that the weighting coefficients corresponding to the spatial domain codebook are represented as a weighting coefficient matrix is merely used as an example rather than a limitation. The weighting coefficients corresponding to the spatial domain codebook may also be represented in a form of a vector, an array, or the like.

In another possible implementation, the at least one codebook includes a first codebook and a second codebook, and the weighting coefficient matrix corresponding to the at least one codebook includes a weighting coefficient matrix corresponding to both the first codebook and the second codebook. In other words, the first information indicates the first codebook, the second codebook, and the weighting coefficient matrix corresponding to the first codebook and the second codebook. Each weighting coefficient included in the weighting coefficient matrix corresponds to one vector in the first codebook and one vector in the second codebook, and different weighting coefficients correspond to different vectors in the first codebook and/or different vectors in the second codebook. The first codebook may be a spatial domain codebook, and the second codebook may be a frequency domain codebook. The following uses an example in which the first codebook is a spatial domain codebook and the second codebook is a frequency domain codebook for description. Optionally, the first codebook and/or the second codebook may alternatively be other codebooks having different names or meanings. This is not limited in this application.

For example, the spatial domain codebook and the frequency domain codebook may be indicated by using indexes, that is, the first information includes an index of the spatial domain codebook and an index of the frequency domain codebook.

For another example, the spatial domain codebook and the frequency domain codebook may be indicated by using a first bitmap and a third bitmap. For description of the first bitmap, refer to the foregoing description. A quantity of bits included in the third bitmap, or a length of the third bitmap, may be a quantity of frequency domain codebooks included in a frequency domain codebook set, and each bit included in the third bitmap corresponds to one frequency domain codebook in the frequency domain codebook set. For example, when a bit indicates "0", it may be considered that a frequency domain codebook corresponding to the bit is not selected; or when a bit indicates "1", it may be considered that a frequency domain codebook corresponding to the bit is selected, or in other words, the frequency domain codebook corresponding to the bit is a frequency domain codebook indicated by the first information.

For another example, the spatial domain codebook may be indicated by using an index of a spatial domain vector included in the spatial domain codebook, and the frequency domain codebook may also be indicated by using an index of a frequency domain vector included in the frequency domain codebook. To be specific, the first information includes indexes of L spatial domain vectors included in the spatial domain codebook and indexes of M frequency domain vectors included in the frequency domain codebook. In other words, the first information may indicate L spatial domain vectors and M frequency domain vectors, the L spatial domain vectors may form the spatial domain codebook, and the M frequency domain vectors may form the frequency domain codebook. It should be noted that, the L spatial domain vectors included in the spatial domain codebook may be L row vectors in the spatial domain codebook, or may be L column vectors in the spatial domain codebook. The M frequency domain vectors included in the frequency domain codebook may be M row vectors in the frequency domain codebook, or may be M column vectors in the frequency domain codebook.

Optionally, when the M frequency domain vectors are the M row vectors in the frequency domain codebook, the first information further indicates $N_\varepsilon$ column vectors included in the frequency domain codebook; or when the M frequency domain vectors are the M column vectors in the frequency domain codebook, the first information further indicates $N_f$ row vectors included in the frequency domain codebook.

For another example, the spatial domain codebook and the frequency domain codebook may be indicated by using a second bitmap and a fourth bitmap. For description of the second bitmap, refer to the foregoing description. A quantity of bits included in the fourth bitmap, or a length of the fourth bitmap, may be a quantity of frequency domain vectors included in a frequency domain codebook set, and each bit included in the fourth bitmap corresponds to one frequency domain vector in the frequency domain codebook set. For example, when a bit indicates "0", it may be considered that a frequency domain codebook corresponding to the bit is not selected; or when a bit indicates "1", it may be considered that a frequency domain codebook corresponding to the bit is selected, or in other words, the frequency domain codebook corresponding to the bit is a frequency domain codebook indicated by the first information.

For example, the weighting coefficient matrix corresponding to the spatial domain codebook and the frequency domain codebook may be indicated in a normalization manner.

For example, the first network device may determine a weighting coefficient with a maximum amplitude (for example, denoted as a maximum coefficient) from the weighting coefficient matrix, and indicate a location of the maximum coefficient in the weighting coefficient matrix (for example, a row sequence number and a column sequence number of the maximum coefficient in the weighting coefficient matrix). Then, the first network device may further indicate a relative value of a weighting coefficient with a maximum amplitude in each row (for example, denoted as a maximum coefficient in the row) in the weighting coefficient matrix relative to the foregoing maximum coefficient, and a relative value of another weighting coefficient in each row relative to the maximum coefficient in the same row; or the first network device may further indicate a relative value of a weighting coefficient with a maximum amplitude in each column (for example, denoted as a maximum coefficient in the column) in the weighting coefficient matrix relative to the foregoing maximum coefficient, and a relative value of another weighting coefficient in each column relative to the maximum coefficient in the same column.

For another example, the first network device may determine a weighting coefficient with a maximum amplitude (that is, the foregoing maximum coefficient) from the weighting coefficient matrix, and indicate a location of the maximum coefficient in the weighting coefficient matrix (for example, a row sequence number and a column sequence number of the maximum coefficient in the weighting coefficient matrix). Then, the first network device may further indicate a relative value of another weighting coefficient in the weighting coefficient matrix relative to the maximum coefficient.

It should be understood that, indicating the weighting coefficient matrix in a normalization manner is merely a possible implementation, and should not constitute any limitation on this application. For example, the first network device may directly indicate an index of a quantized value of each weighting coefficient in the weighting coefficient matrix, or indicate each weighting coefficient in the weighting coefficient matrix in a differential manner.

It should be noted that, in this embodiment of this application, that the weighting coefficients corresponding to the spatial domain codebook and the frequency domain codebook are represented as a weighting coefficient matrix is merely an example rather than a limitation. The weighting coefficient corresponding to the spatial domain codebook and the frequency domain codebook may also be represented in a form of a vector, an array, or the like.

A correspondence between each weighting coefficient in the weighting coefficient matrix and each of a spatial domain vector in the spatial domain codebook and a frequency domain vector in the frequency domain codebook may be indicated by using a bitmap. For example, the bitmap includes $(L \times M)$ bits, and a weighting coefficient indicated by an $(l \times m)^{th}$ bit corresponds to an $l^{th}$ spatial domain vector in the spatial domain codebook and an $m^{th}$ frequency domain vector in the frequency domain codebook, where $l$ is an integer greater than 0 and less than or equal to L, and m is an integer greater than 0 and less than or equal to M.

In still another possible implementation, the at least one codebook includes a first codebook and a third codebook, and the weighting coefficient matrix corresponding to the at least one codebook includes a weighting coefficient matrix corresponding to the first codebook. In other words, the first information indicates the first codebook and the third codebook, and indicates the weighting coefficient matrix corresponding to the first codebook. The first codebook and the weighting coefficient matrix are used to determine a first-stage matrix included in the first beamforming matrix, and the third codebook is used to determine a second-stage matrix included in the first beamforming matrix. The first-stage matrix and the second-stage matrix jointly perform beamforming on downlink transmission. For example, the first-stage matrix is used for digital beamforming on downlink transmission, and the second-stage matrix is used for analog beamforming on a downlink transmission signal. The first codebook may be a spatial domain codebook, and the third codebook may be an analog domain codebook. The following uses an example in which the first codebook is a spatial domain codebook and the third codebook is an analog domain codebook for description.

Optionally, the first codebook and/or the third codebook may alternatively be other codebooks having different names or meanings. This is not limited in this application.

For indication manners of the spatial domain codebook and the weighting coefficient matrix, refer to the foregoing descriptions.

For example, the analog domain codebook may be indicated by using an index, that is, the first information includes an index of the analog domain codebook.

For another example, the analog domain codebook may be indicated by using a fifth bitmap. A quantity of bits included in the fifth bitmap, or a length of the fifth bitmap, may be a quantity of analog domain codebooks included in an analog domain codebook set, and each bit included in the fifth bitmap corresponds to one analog domain codebook in the analog domain codebook set. For example, when a bit indicates "0", it may be considered that an analog domain codebook corresponding to the bit is not selected; or when a bit indicates "1", it may be considered that an analog domain codebook corresponding to the bit is selected, or in other words, the analog domain codebook corresponding to the bit is an analog domain codebook indicated by the first information.

For another example, the analog domain codebook may be indicated by using an index of an analog domain vector included in the analog domain codebook, that is, the first information includes indexes of B analog domain vectors included in the analog domain codebook. In other words, the first information may indicate B analog domain vectors, and the B analog domain vectors may form the analog domain codebook. It should be noted that, the B analog domain vectors included in the analog domain codebook may be B row vectors in the analog domain codebook, or may be B column vectors in the analog domain codebook.

Optionally, when the B analog domain vectors are the B row vectors in the analog domain codebook, the first information further indicates $N_{ant}$ column vectors included in the analog domain codebook; or when the B spatial domain vectors are the B column vectors in the analog domain codebook, the first information further indicates $N_{ant}$ row vectors included in the analog domain codebook.

For another example, the analog domain codebook may be indicated by using a sixth bitmap. A quantity of bits included in the sixth bitmap, or a length of the sixth bitmap, may be a quantity of analog domain vectors included in an analog domain codebook set, and each bit included in the sixth bitmap corresponds to one analog domain vector in the analog domain codebook set. For example, when a bit indicates "0", it may be considered that an analog domain vector corresponding to the bit is not selected; or when a bit indicates "1", it may be considered that an analog domain vector corresponding to the bit is selected, or in other words, the analog domain vector corresponding to the bit is an analog domain vector that is included in the analog domain codebook and that is indicated by the first information.

In still another possible implementation, the at least one codebook includes a first codebook, a second codebook, and a third codebook, and the weighting coefficient matrix corresponding to the at least one codebook includes a weighting coefficient matrix corresponding to both the first codebook and the second codebook. In other words, the first information indicates the first codebook, the second codebook, and the third codebook, and indicates the weighting coefficient matrix corresponding to the first codebook and the second codebook. The first codebook, the second codebook, and the weighting coefficient matrix are used to determine a first-stage matrix included in the first beamforming matrix, and the third codebook is used to determine a second-stage matrix included in the first beamforming matrix. The first codebook may be a spatial domain codebook, the second codebook is a frequency domain codebook, and the third codebook may be an analog domain codebook. The following uses an example in which the first codebook is a spatial domain codebook, the second codebook is a frequency domain codebook, and the third codebook is an analog domain codebook for description. Optionally, the first codebook, the second codebook, and/or the third codebook may alternatively be other codebooks having different names or meanings. This is not limited in this application.

For indication manners of the spatial domain codebook, the frequency domain codebook, the analog domain codebook, and the weighting coefficient matrix, refer to the foregoing descriptions.

A manner in which the first network device generates the first information is not limited in this embodiment of this application.

In a possible implementation, the first network device generates the first information based on a second beamforming matrix. The second beamforming matrix is any one of the following matrices: a beamforming matrix (denoted as an SRS beamforming matrix) determined based on an SRS measurement channel, a beamforming matrix (denoted as a PMI beamforming matrix) determined based on a CSI-RS measurement channel, a beamforming matrix (denoted as a DMRS beamforming matrix) determined based on a DMRS measurement channel, and a static beamforming matrix. Alternatively, the second beamforming matrix is determined based on a plurality of matrices in the following matrices: an SRS beamforming matrix, a PMI beamforming matrix, a DMRS beamforming matrix, and a static beamforming matrix. For example, the second beamforming matrix may be obtained by averaging the foregoing plurality of matrices, or the second beamforming matrix may be obtained by summing the foregoing plurality of matrices.

For example, the first network device projects the second beamforming matrix to at least one codebook set, to obtain the at least one codebook and the weighting coefficient matrix corresponding to the at least one codebook that maximize a channel capacity and/or maximize a channel throughput. The at least one codebook set may include at least one of the following: a spatial domain codebook set, a frequency domain codebook set, and an analog domain codebook set.

The following uses an example in which the second beamforming matrix is an SRS beamforming matrix to describe a manner in which the first network device generates the first information based on the second beamforming matrix.

Manner 1:

The first network device projects the SRS beamforming matrix to a spatial domain codebook set, to obtain a spatial domain codebook and a weighting coefficient matrix corresponding to the spatial domain codebook that maximize a channel capacity and/or maximize a channel throughput. A dimension of the spatial domain codebook may be predefined, or in other words, a quantity L of spatial domain vectors included in the spatial domain codebook may be predefined. For example, the quantity of spatial domain vectors may be predefined based on a quantity of radio frequency channels. For example, the quantity L of spatial domain vectors is half of the quantity of radio frequency channels. For example, when the quantity L of spatial domain vectors is predefined, it may be considered that the spatial domain codebook that maximizes the channel capacity and/or maximizes the channel throughput includes the first L spatial domain vectors that are most correlated when the SRS beamforming matrix is projected to the spatial domain codebook set.

The following describes in detail a specific process in which the first network device determines the L spatial domain vectors included in the spatial domain codebook and the weighting coefficient matrix.

As described above, the spatial domain codebook set may include $N_{trx}$ spatial domain vectors, a dimension of the spatial domain vectors is $N_{trx} \times 1$, and a dimension of a matrix $\mathbf{V}_S$ constructed after the spatial domain vectors included in the spatial domain codebook set are arranged from left to right is $N_{trx} \times N_{trx}$. The first network device may determine a matrix W by using

$$\mathbf{V}_S^H \mathbf{W}_{SRS} = \mathbf{W}$$

. $\mathbf{V}_S^H$ represents a conjugate transposition of $\mathbf{V}_S$, $\mathbf{W}_{SRS}$ represents the SRS beamforming matrix whose dimension is $N_{trx} \times N_f$, and a dimension of the matrix W may be $N_{trx} \times N_f$. $N_{trx}$ rows in W may correspond to the $N_{trx}$ spatial domain vectors included in the spatial domain codebook set. The first network device may separately perform a modulo operation on the $N_{trx}$ rows in the matrix W, and determine L rows with a large modulus based on a modulus length of each row. Row sequence numbers of the L rows in the matrix W may be column sequence numbers of L spatial domain vectors that are most correlated in the spatial domain codebook set. Then, the first network device may determine the first L spatial domain vectors that are most correlated when the SRS beamforming matrix is projected to the spatial domain codebook set, and the L spatial domain vectors form the spatial domain codebook included in the at least one codebook indicated by the first information. In addition, a matrix $\mathbf{W}_c$ whose dimension is $L \times N_f$ and that is formed by elements in the L rows with a large modulus in the matrix **W** is the weighting coefficient matrix.

Further, the first network device generates the first information based on the L spatial domain vectors and the weighting coefficient matrix.

Manner 2:

The first network device projects the SRS beamforming matrix to a spatial domain codebook set and a frequency domain codebook set, to obtain a spatial domain codebook, a frequency domain codebook, and a weighting coefficient matrix corresponding to the spatial domain codebook and the frequency domain codebook that maximize a channel capacity and/or maximize a channel throughput. A dimension of the spatial domain codebook may be predefined, or in other words, a quantity L of spatial domain vectors included in the spatial domain codebook may be predefined. A dimension of the frequency domain codebook may be predefined, or in other words, a quantity M of frequency domain vectors included in the frequency domain codebook is predefined. For example, the quantity of frequency domain vectors may be predefined based on a quantity of frequency domain units. For example, the quantity L of frequency domain vectors is half of the quantity of frequency domain units. For example, when the quantity L of spatial domain vectors and the quantity M of frequency domain vectors are predefined, it may be considered that the spatial domain codebook that maximizes the channel capacity and/or maximizes the channel throughput includes the first L spatial domain vectors that are most correlated when the SRS beamforming matrix is projected to the spatial domain codebook set, and the frequency domain codebook that maximizes the channel capacity and/or maximizes the channel throughput includes the first M frequency domain vectors that are most correlated when the SRS beamforming matrix is projected to the frequency domain codebook set.

The following describes in detail a specific process in which the first network device determines the L spatial domain vectors included in the spatial domain codebook, the M frequency domain vectors included in the frequency domain codebook, and the weighting coefficient matrix.

As described above, a dimension of a matrix $\mathbf{V}_S$ constructed by the spatial domain codebook set is $N_{trx} \times N_{trx}$. The frequency domain codebook set may include $N_f$ frequency domain vectors, a dimension of the frequency domain vectors is $N_f \times 1$, and a dimension of a matrix $\mathbf{V}_F$ constructed after the frequency domain vectors included in the frequency domain codebook set are arranged from left to right is $N_f \times N_f$. The first network device may determine a matrix **W** by using

$$\mathbf{V}_S^H \mathbf{W}_{SRS} \mathbf{V}_F = \mathbf{W}$$

. $\mathbf{V}_S^H$ represents a conjugate transposition of $\mathbf{V}_S$, $\mathbf{W}_{SRS}$ represents the SRS beamforming matrix whose dimension is $N_{trx} \times N_f$, and a dimension of the matrix **W** may be $N_{trx} \times N_f$. $N_{trx}$ rows in **W** may correspond to the $N_{trx}$ spatial domain vectors included in the spatial domain codebook set, and $N_f$ columns in **W** may correspond to the $N_f$ frequency domain vectors included in the frequency domain codebook set. The first network device may separately perform a modulo operation on the $N_{trx}$ rows in the matrix **W,** and determine L rows with a large modulus based on a modulus length of each row. Row sequence numbers of the L rows in the matrix **W** may be column sequence numbers of L spatial domain vectors that are most correlated in the spatial domain codebook set. The first network device may further separately perform a modulo operation on the $N_f$ columns in the matrix **W,** and determine M columns with a large modulus based on a modulus length of each column. Column sequence numbers of the M columns in the matrix **W** may be column sequence numbers of M frequency domain vectors that are most correlated in the spatial domain codebook set. Then, the first network device may determine the first L spatial domain vectors that are most correlated when the SRS beamforming matrix is projected to the spatial domain codebook set, and the first M frequency domain vectors that are most correlated when the SRS beamforming matrix is projected to the frequency domain codebook set. The L spatial domain vectors form the spatial domain codebook included in the at least one codebook indicated by the first information, and the M frequency domain vectors form the frequency domain codebook included in the at least one codebook indicated by the first information. In addition, a matrix $\mathbf{W}_c$ whose dimension is $L \times M$ may be constructed by using elements that overlap in the L rows with a large modulus and the M columns with a large modulus in the matrix **W.** The matrix $\mathbf{W}_c$ may be referred to as the weighting coefficient matrix.

Further, the first network device generates the first information based on the L spatial domain vectors, the M frequency domain vectors, and the weighting coefficient matrix.

Manner 3:

The first network device projects the SRS beamforming matrix to an analog domain codebook set and a spatial domain codebook set, to obtain a spatial domain codebook, a weighting coefficient matrix, and an analog domain codebook that maximize a channel capacity and/or maximize a channel throughput. A dimension of the analog domain codebook may be predefined, or in other words, a quantity B of analog domain vectors included in the analog domain codebook is predefined. For example, the quantity of analog domain vectors may be predefined based on a quantity of antenna elements.

For example, the quantity B of analog domain vectors is half of the quantity of antenna elements. For example, it may be considered that the analog domain codebook that maximizes the channel capacity and/or maximizes the channel throughput includes the first B analog domain vectors that are most correlated when the SRS beamforming matrix is projected to the analog domain codebook set.

The following describes in detail a process in which the first network device determines the B analog domain vectors included in the analog domain codebook, L spatial domain vectors included in the spatial domain codebook, and the weighting coefficient matrix.

As described above, a dimension of a matrix $\mathbf{V}_S$ constructed by the spatial domain codebook set is $N_{trx} \times N_{trx}$. The analog domain codebook set may include $N_{ant}$ analog domain vectors, a dimension of the analog domain vectors is $N_{ant} \times 1$, and a dimension of a matrix $\mathbf{V}_M$ constructed after the analog domain vectors included in the analog domain codebook set are arranged from left to right is $N_{ant} \times N_{ant}$. The first network device may determine a matrix **W'** by using

$$\mathbf{V}_M^H \mathbf{W}_{SRS} = \mathbf{W}'$$

. $\mathbf{V}_M^H$ represents a conjugate transposition of $\mathbf{V}_M$, and $\mathbf{W}_{SRS}$ represents the SRS beamforming matrix. When a quantity of radio frequency channels is less than a quantity of antenna elements, a dimension of $\mathbf{W}_{SRS}$ may be $N_{ant} \times N_f$, and a dimension of the matrix **W'** may be $N_{ant} \times N_f$. $N_{ant}$ rows in **W'** may correspond to the $N_{ant}$ analog domain vectors included in the analog domain codebook set. The first network device may separately perform a modulo operation on the $N_{ant}$ rows in the matrix **W'**, and determine B rows with a large modulus based on a modulus length of each row. Row sequence numbers of the B rows in the matrix **W'** may be column sequence numbers of B analog domain vectors that are most correlated in the analog domain codebook set. Then, the first network device may determine the first B analog domain vectors that are most correlated when the SRS beamforming matrix is projected to the analog domain codebook set, and the B analog domain vectors form the analog domain codebook included in the at least one codebook indicated by the first information.

Further, the first network device may determine a matrix **W** by using

$$\mathbf{V}_{S'}^H \mathbf{W}'' = \mathbf{W}$$

. **W"** is a matrix whose dimension is $B \times N_f$ and that is formed by elements in the B rows with a large modulus in the matrix **W'**. $\mathbf{V}_{S'}^H$ represents a conjugate transposition of $\mathbf{V}_{S'}$, a dimension of $\mathbf{V}_{S'}$ is $B \times N_{trx}$, each column vector in $\mathbf{V}_{S'}$ is truncation of each column vector in $\mathbf{V}_S$, and a truncation dimension is $B \times 1$. In other words, elements included in each column vector in $\mathbf{V}_{S'}$ are the first B elements in each column vector in $\mathbf{V}_S$. A dimension of the matrix **W** may be $N_{trx} \times N_f$. $N_{trx}$ rows in **W** may correspond to the $N_{trx}$ spatial domain vectors included in the spatial domain codebook set. The first network device may separately perform a modulo operation on the $N_{trx}$ rows in the matrix **W**, and determine L rows with a large modulus based on a modulus length of each row. Row sequence numbers of the L rows in the matrix **W** may be column sequence numbers of L spatial domain vectors that are most correlated in the spatial domain codebook set. Then, the first network device may determine the first L spatial domain vectors that are most correlated when the SRS beamforming matrix is projected to the spatial domain codebook set, and the L spatial domain vectors form the spatial domain codebook included in the at least one codebook indicated by the first information. In addition, a matrix $\mathbf{W_{c1}}$ whose dimension is $L \times N_f$ and that is formed by elements in the L rows with a large modulus in the matrix **W** is the weighting coefficient matrix corresponding to the spatial domain codebook.

Further, the first network device generates the first information based on the L spatial domain vectors, the B analog domain vectors, and the weighting coefficient matrix.

Manner 4:

The first network device projects the SRS beamforming matrix to an analog domain codebook set, a spatial domain codebook set, and a frequency domain codebook set, to obtain a spatial domain codebook, a frequency domain codebook, a weighting coefficient matrix, and an analog domain codebook that maximize a channel capacity and/or maximize a channel throughput.

The following describes in detail a process in which the first network device determines B analog domain vectors included in the analog domain codebook, L spatial domain vectors included in the spatial domain codebook, and M frequency domain vectors included in the frequency domain codebook, and the weighting coefficient matrix.

As described above, a dimension of a matrix $\mathbf{V}_S$ constructed by the spatial domain codebook set is $N_{trx} \times N_{trx}$, a dimension of a matrix $\mathbf{V}_F$ constructed by the frequency domain codebook set is $N_f \times N_f$, and a dimension of a matrix $\mathbf{V}_M$ constructed by the analog domain codebook set is $N_{ant} \times N_{ant}$. The first network device may determine a matrix **W'** by using

$$\mathbf{V}_M^H \mathbf{W}_{SRS} = \mathbf{W}'$$

. The first network device may separately perform a modulo operation on the $N_{ant}$ rows in the matrix **W'**, and determine B rows with a large modulus based on a modulus length of each row. Row sequence numbers of the B rows in the matrix **W'** may be column sequence numbers of B analog domain vectors that are most correlated in the analog domain codebook set. Then, the first network device may determine the first B analog domain vectors that are most correlated when the SRS beamforming matrix is projected to the analog domain codebook set, and the B analog domain vectors form the analog domain codebook included in the at least one codebook indicated by the first information.

Further, the first network device may determine a matrix **W** by using $\mathbf{V}_{S'}^H \mathbf{W}'' \mathbf{V}_F = \mathbf{W}$ . A dimension of the matrix **W** may be $N_{trx} \times N_f$. $N_{trx}$ rows in **W** may correspond to the $N_{trx}$ spatial domain vectors included in the spatial domain codebook set, and $N_f$ rows in **W** may correspond to the $N_f$ frequency domain vectors included in the frequency domain codebook set. The first network device may separately perform a modulo operation on the $N_{trx}$ rows in the matrix **W**, and determine L rows with a large modulus based on a modulus length of each row. Row sequence numbers of the L rows in the matrix **W** may be column sequence numbers of L spatial domain vectors that are most correlated in the spatial domain codebook set. The first network device may further separately perform a modulo operation on the Nf columns in the matrix **W**, and determine M columns with a large modulus based on a modulus length of each column. Column sequence numbers of the M columns in the matrix **W** may be column sequence numbers of M frequency domain vectors that are most correlated in the spatial domain codebook set. Then, the first network device may determine the first L spatial domain vectors that are most correlated when the SRS beamforming matrix is projected to the spatial domain codebook set, and the first M frequency domain vectors that are most correlated when the SRS beamforming matrix is projected to the frequency domain codebook set. The L spatial domain vectors form the spatial domain codebook included in the at least one codebook indicated by the first information, and the M frequency domain vectors form the frequency domain codebook included in the at least one codebook indicated by the first information. In addition, a matrix $\mathbf{W_c}$ whose dimension is $L \times M$ may be constructed by using elements that overlap in the L rows with a large modulus and the M columns with a large modulus in the matrix **W**. The matrix $\mathbf{W_c}$ may be referred to as the weighting coefficient matrix.

Further, the first network device generates the first information based on the L spatial domain vectors, the M frequency domain vectors, the weighting coefficient matrix, and the B analog domain vectors.

It may be understood that, a manner in which the first network device determines the first information based on the PMI beamforming matrix, the DMRS beamforming rectangle, or the static beamforming matrix is the same as or similar to the manner in which the first network device determines the first information based on the SRS beamforming matrix. For brevity, details are not described in this embodiment of this application.

In another possible implementation, the first network device generates the first information based on a first channel matrix. The first channel matrix may be any one of the following channel matrices: a channel matrix obtained based on an SRS measurement channel, a channel matrix obtained based on a CSI-RS measurement channel, and a channel matrix obtained based on a DMRS measurement channel. Alternatively, the first channel matrix is determined based on a plurality of channel matrices in the following channel matrices: a channel matrix obtained based on an SRS measurement channel, a channel matrix obtained based on a CSI-RS measurement channel, and a channel matrix obtained based on a DMRS measurement channel. For example, the first channel matrix may be obtained by averaging the plurality of matrices, or the first channel matrix may be obtained by summing the plurality of matrices.

The channel matrix is a form of channel information, and the channel information may be information used to represent a channel. The channel matrix may be used to determine a beamforming matrix. For example, singular value decomposition (singular value decomposition, SVD) may be performed on the channel matrix to obtain the beamforming matrix.

For example, the first network device projects the first channel matrix to at least one codebook set, to obtain the at least one codebook and the weighting coefficient matrix corresponding to the at least one codebook that maximize a channel capacity and/or maximize a channel throughput. The at least one codebook set may include at least one of the following: a spatial domain codebook set, a frequency domain codebook set, and an analog domain codebook set.

The following describes a manner in which the first network device generates the first information.

Manner 1:

The first network device projects the first channel matrix to a spatial domain codebook set, to obtain a spatial domain codebook and a weighting coefficient matrix corresponding to the spatial domain codebook that maximize a channel capacity and/or maximize a channel throughput. As described above, the spatial domain codebook that maximizes the channel capacity and/or maximizes the channel throughput includes the first L spatial domain vectors that are most correlated when the first channel matrix is projected to the spatial domain codebook set.

The following describes in detail a specific process in which the first network device determines the L spatial domain vectors included in the spatial domain codebook and the weighting coefficient matrix.

As described above, a dimension of a matrix $\mathbf{V}_S$ constructed by the spatial domain codebook set is $N_{trx} \times N_{trx}$. The first network device may determine a matrix $\mathbf{W}$ by using $$\mathbf{V}_S^H \mathbf{H} = \mathbf{W}.$$ H represents the first channel matrix, a dimension is $N_{trx} \times N_f$, and a dimension of the matrix $\mathbf{W}$ may be $N_{trx} \times N_f$. $N_{trx}$ rows in $\mathbf{W}$ may correspond to the $N_{trx}$ spatial domain vectors included in the spatial domain codebook set. The first network device may separately perform a modulo operation on the $N_{trx}$ rows in the matrix $\mathbf{W}$, and determine L rows with a large modulus based on a modulus length of each row. Row sequence numbers of the L rows in the matrix $\mathbf{W}$ may be column sequence numbers of L spatial domain vectors that are most correlated in the spatial domain codebook set. Then, the first network device may determine the first L spatial domain vectors that are most correlated when the first channel matrix is projected to the spatial domain codebook set, and the L spatial domain vectors form the spatial domain codebook included in the at least one codebook indicated by the first information. In addition, a matrix $\mathbf{W}_c$ whose dimension is $L \times N_f$ and that is formed by elements in the L rows with a large modulus in the matrix $\mathbf{W}$ is the weighting coefficient matrix.

Further, the first network device generates the first information based on the L spatial domain vectors and the weighting coefficient matrix.

Manner 2:

The first network device projects the first channel matrix to a spatial domain codebook set and a frequency domain codebook set, to obtain a spatial domain codebook, a frequency domain codebook, and a first weighting coefficient matrix corresponding to the spatial domain codebook and the frequency domain codebook that maximize a channel capacity and/or maximize a channel throughput. As described above, the spatial domain codebook that maximizes the channel capacity and/or maximizes the channel throughput includes the first L spatial domain vectors that are most correlated when the first channel matrix is projected to the spatial domain codebook set, and the frequency domain codebook that maximizes the channel capacity and/or maximizes the channel throughput includes the first M frequency domain vectors that are most correlated when the first channel matrix is projected to the frequency domain codebook set.

The following describes in detail a specific process in which the first network device determines the L spatial domain vectors included in the spatial domain codebook, the M frequency domain vectors included in the frequency domain codebook, and the weighting coefficient matrix.

As described above, a dimension of a matrix $\mathbf{V}_S$ constructed by the spatial domain codebook set is $N_{trx} \times N_{trx}$, and a dimension of a matrix $\mathbf{V}_F$ constructed by the frequency domain codebook set is $N_f \times N_f$. The first network device may determine a matrix $\mathbf{W}$ by using $$\mathbf{V}_S^H \mathbf{H} \mathbf{V}_F = \mathbf{W}.$$ $N_{trx}$ rows in $\mathbf{W}$ may correspond to the $N_{trx}$ spatial domain vectors included in the spatial domain codebook set, and $N_f$ rows in $\mathbf{W}$ may correspond to the Nrfrequency domain vectors included in the frequency domain codebook set. The first network device may separately perform a modulo operation on the $N_{trx}$ rows in the matrix $\mathbf{W}$, and determine L rows with a large modulus based on a modulus length of each row. Row sequence numbers of the L rows in the matrix $\mathbf{W}$ may be

column sequence numbers of L spatial domain vectors that are most correlated in the spatial domain codebook set. The first network device may further separately perform a modulo operation on the $N_f$ columns in the matrix **W,** and determine M columns with a large modulus based on a modulus length of each column. Column sequence numbers of the M columns in the matrix **W** may be column sequence numbers of M frequency domain vectors that are most correlated in the spatial domain codebook set. Then, the first network device may determine the first L spatial domain vectors that are most correlated when the first channel matrix is projected to the spatial domain codebook set, and the first M frequency domain vectors that are most correlated when the first channel matrix is projected to the frequency domain codebook set. The L spatial domain vectors form the spatial domain codebook included in the at least one codebook indicated by the first information, and the M frequency domain vectors form the frequency domain codebook included in the at least one codebook indicated by the first information. In addition, a matrix **W$_c$** whose dimension is L×M may be constructed by using elements that overlap in the L rows with a large modulus and the M columns with a large modulus in the matrix **W.** The matrix **W$_c$** may be referred to as the weighting coefficient matrix.

Further, the first network device generates the first information based on the L spatial domain vectors, the M frequency domain vectors, and the weighting coefficient matrix.

Manner 3:

The first network device projects the first channel matrix to an analog domain codebook set and a spatial domain codebook set, to obtain a spatial domain codebook, a weighting coefficient matrix, and an analog domain codebook that maximize a channel capacity and/or maximize a channel throughput. A dimension of the analog domain codebook may be predefined, or in other words, a quantity B of analog domain vectors included in the analog domain codebook is predefined. For example, it may be considered that the analog domain codebook that maximizes the channel capacity and/or maximizes the channel throughput includes the first B analog domain vectors that are most correlated when the first channel matrix is projected to the analog domain codebook set.

The following describes in detail a process in which the first network device determines the B analog domain vectors included in the analog domain codebook, L spatial domain vectors included in the spatial domain codebook, and the weighting coefficient matrix.

As described above, a dimension of a matrix **V**$_S$ constructed by the spatial domain codebook set is $N_{trx} \times N_{trx}$, and a dimension of a matrix **V**$_M$ constructed by the analog domain codebook set is $N_{ant} \times N_{ant}$. The first network device may determine a matrix **W'** by using

$$\mathbf{V}_M^H \mathbf{H} = \mathbf{W}^{'}$$

. When a quantity of radio frequency channels is less than a quantity of antenna elements, a dimension of **H** may be $N_{ant} \times N_f$, and a dimension of the matrix **w'** may be $N_{ant} \times N_f$. $N_{ant}$ rows in **W'** may correspond to the $N_{ant}$ analog domain vectors included in the analog domain codebook set. The first network device may separately perform a modulo operation on the $N_{ant}$ rows in the matrix **W'**, and determine B rows with a large modulus based on a modulus length of each row. Row sequence numbers of the B rows in the matrix **W'** may be column sequence numbers of B analog domain vectors that are most correlated in the analog domain codebook set. Then, the first network device may determine the first B analog domain vectors that are most correlated when the first channel matrix is projected to the analog domain codebook set, and the B analog domain vectors form the analog domain codebook included in the at least one codebook indicated by the first information.

Further, the first network device may determine a matrix **W** by using $\mathbf{V}_{S'}^H \mathbf{W}^{''} = \mathbf{W}$ . **W''** is a matrix whose dimension is B×N$_f$ and that is formed by elements in the B rows with a large modulus in the matrix **W'**. $\mathbf{V}_{S'}^H$ represents a conjugate transposition of **V**$_{S'}$, a dimension of **V**$_{S'}$ is B×N$_{trx}$, each column vector in **V**$_{S'}$ is truncation of each column vector in **V**$_S$, and a truncation dimension is B×1. In other words, elements included in each column vector in **V**$_{S'}$ are the first B elements in each column vector in **V**$_S$. A dimension of the matrix **W** may be $N_{trx} \times N_f$. $N_{trx}$ rows in **W** may correspond to the $N_{trx}$ spatial domain vectors included in the spatial domain codebook set. The first network device may separately perform a modulo operation on the $N_{trx}$ rows in the matrix **W,** and determine L rows with a large modulus based on a modulus length of each row. Row sequence numbers of the L rows in the matrix **W** may be column sequence numbers of L spatial domain vectors that are most correlated in the spatial domain codebook set. Then, the first network device may determine the first L spatial domain vectors that are most correlated when the first channel matrix is projected to the spatial domain codebook set, and the L spatial domain vectors form the spatial domain codebook included in the at least one codebook indicated by the first information. In addition, a matrix **W$_{c1}$** whose dimension is L×N$_f$ and that is formed by elements in the L rows with a large modulus in the matrix **W** is the weighting coefficient matrix corresponding to the spatial domain codebook.

Further, the first network device generates the first information based on the L spatial domain vectors, the B analog domain vectors, and the weighting coefficient matrix.

Manner 4:

The first network device projects the first channel matrix to an analog domain codebook set, a spatial domain codebook set, and a frequency domain codebook set, to obtain a spatial domain codebook, a frequency domain codebook, a weighting coefficient matrix, and an analog domain codebook that maximize a channel capacity and/or maximize a channel throughput.

The following describes in detail a process in which the first network device determines B analog domain vectors included in the analog domain codebook, L spatial domain vectors included in the spatial domain codebook, and M frequency domain vectors included in the frequency domain codebook, and the weighting coefficient matrix.

As described above, a dimension of a matrix $\mathbf{V}_S$ constructed by the spatial domain codebook set is $N_{trx} \times N_{trx}$, a dimension of a matrix $\mathbf{V}_F$ constructed by the frequency domain codebook set is $N_f \times N_f$, and a dimension of a matrix $\mathbf{V}_M$ constructed by the analog domain codebook set is $N_{ant} \times N_{ant}$. The first network device may determine a matrix $\mathbf{W}'$ by using

$$\mathbf{V}_M^H \mathbf{H} = \mathbf{W}'$$

. The first network device may separately perform a modulo operation on the $N_{ant}$ rows in the matrix $\mathbf{W}'$, and determine B rows with a large modulus based on a modulus length of each row. Row sequence numbers of the B rows in the matrix $\mathbf{W}'$ may be column sequence numbers of B analog domain vectors that are most correlated in the analog domain codebook set. Then, the first network device may determine the first B analog domain vectors that are most correlated when the SRS beamforming matrix is projected to the analog domain codebook set, and the B analog domain vectors form the analog domain codebook included in the at least one codebook indicated by the first information.

Further, the first network device may determine a matrix $\mathbf{W}$ by using

$$\mathbf{V}_{S'}^H \mathbf{W}'' \mathbf{V}_F = \mathbf{W}$$

. A dimension of the matrix W may be $N_{trx} \times N_f$. $N_{trx}$ rows in $\mathbf{W}$ may correspond to the $N_{trx}$ spatial domain vectors included in the spatial domain codebook set, and $N_f$ rows in $\mathbf{W}$ may correspond to the $N_f$ frequency domain vectors included in the frequency domain codebook set. The first network device may separately perform a modulo operation on the $N_{trx}$ rows in the matrix $\mathbf{W}$, and determine L rows with a large modulus based on a modulus length of each row. Row sequence numbers of the L rows in the matrix $\mathbf{W}$ may be column sequence numbers of L spatial domain vectors that are most correlated in the spatial domain codebook set. The first network device may further separately perform a modulo operation on the $N_f$ columns in the matrix $\mathbf{W}$, and determine M columns with a large modulus based on a modulus length of each column. Column sequence numbers of the M columns in the matrix $\mathbf{W}$ may be column sequence numbers of M frequency domain vectors that are most correlated in the spatial domain codebook set. Then, the first network device may determine the first L spatial domain vectors that are most correlated when the SRS beamforming matrix is projected to the spatial domain codebook set, and the first M frequency domain vectors that are most correlated when the SRS beamforming matrix is projected to the frequency domain codebook set. The L spatial domain vectors form the spatial domain codebook included in the at least one codebook indicated by the first information, and the M frequency domain vectors form the frequency domain codebook included in the at least one codebook indicated by the first information. In addition, a matrix $\mathbf{W}_c$ whose dimension is $L \times M$ may be constructed by using elements that overlap in the L rows with a large modulus and the M columns with a large modulus in the matrix $\mathbf{W}$. The matrix $\mathbf{W}_c$ may be referred to as the weighting coefficient matrix.

Further, the first network device generates the first information based on the L spatial domain vectors, the M frequency domain vectors, the weighting coefficient matrix, and the B analog domain vectors.

S320: The first network device sends the first information to a second network device. Correspondingly, in S320, the second network device receives the first information from the first network device.

Refer to the foregoing description of FIG. 2. If the first network device is a control device, and the second network device is a radio frequency device, after the second network device receives the first information, the second network device determines the first beamforming matrix by using the reconstruction module. In other words, the method 300 may further include S330.

S330: The second network device determines, based on the first information, the at least one codebook and the weighting coefficient matrix corresponding to the at least one codebook.

After receiving the first information from the first network device, the second network device may determine the at least one codebook and the weighting coefficient matrix of the at least one codebook based on the first information. Specifically, the second network device determines the at least one codebook based on at least one codebook set and the first information. For example, if the first information includes an index of a spatial domain codebook, the second network device determines the spatial domain codebook from a spatial domain codebook set based on the index of the spatial domain codebook. For another example, if the first information includes indexes of L spatial domain vectors, the second network device determines the L spatial domain vectors from the spatial domain codebook set based on the indexes of the L spatial domain vectors, and then determines the spatial domain codebook based on the L spatial domain vectors. For example, the second network device arranges the L spatial domain vectors from left to right to construct the spatial domain codebook. For another example, if the first information further includes an index of a frequency domain codebook, the second network device determines the frequency domain codebook from a frequency domain codebook set based on the index of the frequency domain codebook. For another example, if the first information further includes an index of an analog domain codebook, the second network device determines the analog domain codebook from an analog domain codebook set based on the index of the analog domain codebook.

Optionally, if the first network device is a control device, and the second network device is a radio frequency device, after determining the at least one codebook and the weighting coefficient corresponding to the at least one codebook, the second network device may determine the first beamforming matrix based on the at least one codebook and the weighting coefficient matrix corresponding to the at least one codebook. Further, the second network device may perform beamforming on a signal based on the first beamforming matrix.

For example, if the at least one codebook includes a spatial domain codebook and a weighting coefficient matrix corresponding to the spatial domain codebook, and the first information is determined based on the second beamforming matrix, the second network device may directly determine the first beamforming matrix based on the spatial domain codebook and the weighting coefficient matrix corresponding to the spatial domain codebook. For example, the second network device may determine $\mathbf{W}_{SRS}^{'}$ by using $\mathbf{W}_S \mathbf{W}_c = \mathbf{W}_{SRS}^{'}$, where $\mathbf{W}_S$ represents the spatial domain codebook whose dimension is $N_{trx} \times L$, $\mathbf{W_c}$ is a weighting coefficient matrix whose dimension is $L \times N_f$, and $\mathbf{W}_{SRS}^{'}$ is the first beamforming matrix.

If the first information is determined based on the first channel matrix, the second network device may determine a second channel matrix based on the spatial domain codebook and the weighting coefficient matrix corresponding to the spatial domain codebook. For example, the second network device may determine **H'** by using $\mathbf{W}_S \mathbf{W}_c = \mathbf{H'}$, where **H'** represents the second channel matrix. Then, the second network device determines the first beamforming matrix based on the second channel matrix. For example, the second network device obtains the first beamforming matrix by performing singular value decomposition (singular value decomposition, SVD) on the second channel matrix.

For example, if the at least one codebook includes a spatial domain codebook, a frequency domain codebook, and a weighting coefficient matrix, and the first information is determined based on the second beamforming matrix, the second network device may directly determine the first beamforming matrix based on the spatial domain codebook, the frequency domain codebook, and the weighting coefficient matrix. For example, the second network device may determine $\mathbf{W}_{SRS}^{'}$ by using $\mathbf{W}_S \mathbf{W}_c \mathbf{W}_F^{H} = \mathbf{W}_{SRS}^{'}$, where $\mathbf{W}_S$ represents the spatial domain codebook whose dimension is $N_{trx} \times L$, $\mathbf{W_c}$ is a weighting coefficient matrix whose dimension is $L \times M$, $\mathbf{W}_F^{H}$ represents a conjugate transposition of $\mathbf{W}_F$, $\mathbf{W}_F$ represents the frequency domain codebook whose dimension is $N_f \times M$, and $\mathbf{W}_{SRS}^{'}$ is the first beamforming matrix.

If the first information is determined based on the first channel matrix, the second network device may determine the second channel matrix based on the spatial domain codebook, the frequency domain codebook, and the weighting coefficient matrix. For example, the second network device may determine **H'** by using $\mathbf{W}_S \mathbf{W}_c \mathbf{W}_F^{H} = \mathbf{H'}$. Then, the second network device determines the first beamforming matrix based on the second channel matrix. For example, the second network device performs SVD on the second channel matrix to obtain the first beamforming matrix.

For example, if the at least one codebook includes a spatial domain codebook, a weighting coefficient matrix corresponding to the spatial domain codebook, and an analog domain codebook, and the first information is determined based on the second beamforming matrix, the second network device may directly determine the first-stage matrix based on the spatial domain codebook and the weighting coefficient matrix corresponding to the spatial domain codebook, and directly use the analog domain codebook as the second-stage matrix.

If the first information is determined based on the first channel matrix, the second network device may directly use the analog domain codebook as the second-stage matrix, and may determine the second channel matrix based on the spatial domain codebook and the weighting coefficient matrix. For example, the second network device may determine **H'** by using $\mathbf{W}_S \mathbf{W}_c = \mathbf{H'}$. Then, the second network device determines the first-stage matrix based on the second channel matrix. For example, the second network device performs SVD on the second channel matrix to obtain the first-stage matrix.

For example, if the at least one codebook includes a spatial domain codebook, a frequency domain codebook, a weighting coefficient matrix corresponding to the spatial domain codebook and the frequency domain codebook, and an analog domain codebook, and the first information is determined based on the second beamforming matrix, the second network device may directly determine the first-stage matrix based on the spatial domain codebook, the frequency domain codebook, and the weighting coefficient matrix corresponding to the spatial domain codebook and the frequency domain codebook, and directly use the analog domain codebook as the second-stage matrix.

If the first information is determined based on the first channel matrix, the second network device may directly use the analog domain codebook as the second-stage matrix, and may determine the second channel matrix based on the spatial domain codebook, the frequency domain codebook, and the weighting coefficient matrix. For example, the second network device may determine **H**' by using $\mathbf{W}_S \mathbf{W}_c \mathbf{W}_F^H = \mathbf{H}'$. Then, the second network device determines the first-stage matrix based on the second channel matrix. For example, the second network device performs SVD on the second channel matrix to obtain the first-stage matrix.

In this embodiment of this application, the first network device sends, to the second network device, the first information indicating the at least one codebook and the weighting coefficient matrix corresponding to the at least one codebook, instead of sending a beamforming matrix, so that an amount of data sent by the first network device to the second network device can be reduced. For example, the first information may indicate the at least one codebook by using a codebook index, that is, the first information may include an index of the at least one codebook, and a data amount of the index of the at least one codebook is far less than a data amount of the entire beamforming matrix.

In addition, when a quantity of radio frequency channels is less than a quantity of antenna elements, the first network device may obtain an analog domain codebook by projecting the second beamforming matrix or the first channel matrix to an analog domain codebook set, and indicate the analog domain codebook to the second network device, so that the second network device can use the analog domain codebook as the second-stage matrix, and perform secondary beamforming on downlink transmission based on the second-stage matrix, thereby implementing a more precise beam direction.

In addition, the first network device may determine the second beamforming matrix based on more of an SRS beamforming matrix, a PMI beamforming matrix, a DMRS beamforming matrix, and a static beamforming matrix, and generate the first information based on the second beamforming matrix. Alternatively, the first network device determines the first channel matrix based on a plurality of the following channel matrices: a channel matrix obtained based on an SRS measurement channel, a channel matrix obtained based on a CSI-RS measurement channel, and a channel matrix obtained based on a DMRS measurement channel, and generate the first information based on the first channel matrix. Correspondingly, performance of the first beamforming matrix determined by the second network device based on the first information is better, so that downlink transmission performance can be improved.

Refer to the foregoing description of FIG. 2. If the first network device is a control device, after generating the first information, the first network device may further send, to a third network device, the first information or information indicating the at least one codebook and the weighting coefficient matrix corresponding to the at least one codebook. The third network device is a radio frequency device or a control device, and the third network device and the second network device belong to different cells. If the third network device is a control device, the third network device may further send, to a radio frequency device connected to the third network device, the first information or the information indicating the at least one codebook and the weighting coefficient matrix corresponding to the at least one codebook. Further, the third network device or the radio frequency device connected to the third network device may determine a third beamforming matrix based on the at least one codebook and the weighting coefficient matrix corresponding to the at least one codebook or the first beamforming matrix. Therefore, when the third network device or the radio frequency device connected to the third network device performs beamforming on a downlink transmission signal by using the third beamforming matrix, interference to a user served by the second network device can be avoided as far as possible, or interference caused by a user served by the second network device to a user served by the third network device or the radio frequency device connected to the third network device can be avoided as far as possible.

If the first network device is a radio frequency device, and the second network device is a control device, after receiving the first information from the first network device, the second network device may send, to a fourth network device, the first information or information indicating the at least one codebook and the weighting coefficient matrix corresponding to the at least one codebook. The fourth network device is a radio frequency device or a control device. If the fourth network device is a control device, the fourth network device may further send, to a radio frequency device connected to the fourth network device, the first information or the information indicating the at least one codebook and the weighting coefficient matrix corresponding to the at least one codebook. Further, the fourth network device or the radio frequency device connected to the fourth network device may determine a fourth beamforming matrix based on the at least one codebook and the weighting coefficient matrix corresponding to the at least one codebook or the first beamforming matrix. Therefore, when the fourth network device or the radio frequency device connected to the fourth network device performs beamforming on a downlink transmission signal by using the fourth beamforming matrix, interference to a user served by the first network device can be avoided as far as possible, or interference caused by a user served by the first network device to a user served by the fourth network device or the radio frequency device connected to the fourth network device can be avoided as far as possible.

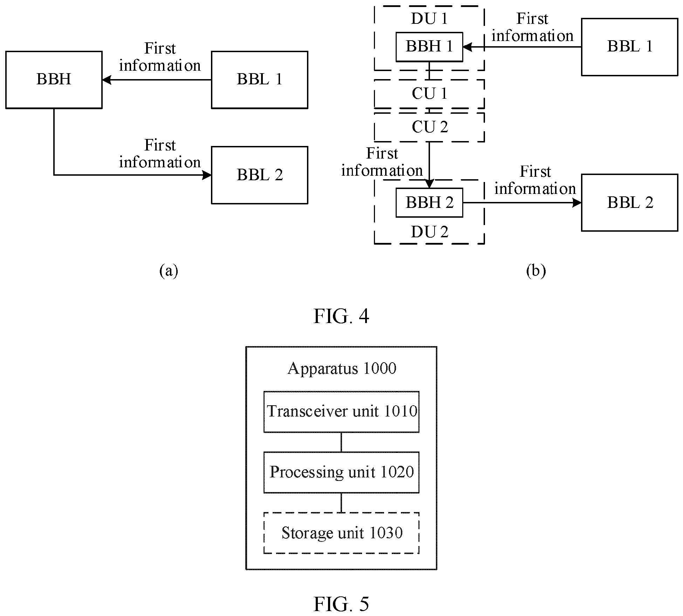

As shown in (a) in FIG. 4, after a BBL 1 (a functional module included in the first network device) sends the first information to a BBH (a functional module included in the second network device), the BBH may send the first information to a BBL 2 (a functional module included in the fourth network device). The BBL 2 receives the first information, and may determine the first beamforming matrix based on the first information.

As shown in (b) in FIG. 4, after the BBL 1 (the functional module included in the first network device) sends the first information to a BBH 1 (a functional module included in the second network device), the BBH 1 may send the first information to a BBH 2 (a functional module included in the fourth network device). The BBH 2 receives the first information, and then sends the first information to the BBL 2. After receiving the first information, the BBL 2 may determine the first beamforming matrix based on the first information. Optionally, in a process in which the BBH 1 sends the first information to the BBH 2, specifically, the BBH 1 may send the first information to the BBH 2 by using a DU 1 including the BBH 1. For example, the DU 1 may directly send the first information to the BBH 2, or the DU 1 sends the first information to a CU 1 connected to the DU 1, and then the CU 1 sends the first information to the BBH 2. Optionally, in a process in which the BBH 1 sends the first information to the BBH 2, specifically, the BBH 1 may send the first information to the CU 1, and then the CU 1 sends the first information to the BBH 2. Optionally, in a process in which the BBH 1/CU 1/DU 1 sends the first information to the BBH 2, specifically, the BBH 1/CU 1/DU 1 may directly send the first information to the BBH 2; or the BBH 1/CU 1/DU 1 may send the first information to a DU 2 including the BBH 2; or the BBH 1/CU 1/DU 1 may send the first information to a CU 2, and then the CU 2 sends the first information to the DU 2BBH 2.

As described above, when the first beamforming matrix is determined based on the first information, the at least one codebook is specifically determined based on at least one codebook set and the first information, and then the first beamforming matrix is determined based on the at least one codebook and the weighting coefficient matrix of the at least one codebook. Therefore, when the third network device and the first network device belong to different operators, to enable the third network device or the radio frequency device connected to the third network device to determine the first beamforming matrix based on the first information, the operators to which the third network device and the first network device belong may pre-agree on at least one codebook set. For example, the operators to which the third network device and the first network device belong may pre-agree on that the spatial domain codebook set is a DFT matrix. For another example, the operators to which the third network device and the first network device belong may pre-agree on that the spatial domain codebook set is an oversampling DFT matrix. It may be understood that, when the operators to which the third network device and the first network device belong pre-agree on at least one codebook set, the first network device determines the first information based on the at least one pre-agreed codebook set. Correspondingly, the third network device or the radio frequency device connected to the third network device determines the first beamforming matrix based on the at least one pre-agreed codebook set.

A manner in which different operators pre-agree on at least one codebook set is not limited in this embodiment of this application. For example, if at least one codebook set is defined in a protocol, different operators may agree on at least one codebook set by pre-agreeing on a used protocol. For another example, different operators may pre-agree on at least one codebook set through subscription.

Similarly, when the fourth network device and the first network device belong to different operators, the operators to which the fourth network device and the first network device belong may pre-agree on at least one codebook set.

The method provided in embodiments of this application is described above in detail with reference to FIG. 3. Apparatuses provided in embodiments of this application are described below in detail with reference to FIG. 5 to FIG. 7. It should be understood that descriptions of apparatus embodiments correspond to the descriptions of the method embodiments. Therefore, for content that is not described in detail, refer to the foregoing method embodiments. For brevity, details are not described herein again.

FIG. 5 is a schematic block diagram of an apparatus 1000 according to an embodiment of this application. As shown in the figure, the apparatus 1000 may include a transceiver unit 1010 and a processing unit 1020.

In a possible design, the apparatus 1000 may be the first network device in the foregoing method embodiments, or may be a chip configured to implement a function of the first network device in the foregoing method embodiments.

It should be understood that, the apparatus 1000 may correspond to the first network device in the method 300 according to embodiments of this application, and the apparatus 1000 may include units configured to perform the method performed by the first network device in the method 300 in FIG. 2. In addition, the units in the apparatus 1000 and the foregoing other operations and/or functions are separately used to implement corresponding procedures of the method 300 in FIG. 3. It should be understood that a specific process in which the units perform the foregoing corresponding steps is described in detail in the foregoing method embodiments. For brevity, details are not described herein again.

For example, the processing unit 1020 included in the apparatus 1000 may correspond to the generation module shown in (a) in FIG. 2. Optionally, the processing unit 1020 may further correspond to the calculation module and the quantization module shown in (a) in FIG. 2. Alternatively, the processing unit 1020 included in the apparatus 1000 may correspond to the generation module shown in (b) in FIG. 2. Optionally, the processing unit 1020 may further correspond to the calculation module, the quantization module, the reconstruction module, and the beamforming module shown in (b) in FIG. 2.

In another possible design, the apparatus 1000 may be the second network device in the foregoing method embodiments, or may be a chip configured to implement a function of the second network device in the foregoing method embodiments.

It should be understood that, the apparatus 1000 may correspond to the second network device in the method 300 according to embodiments of this application, and the apparatus 1000 may include units configured to perform the method performed by the second network device in the method 300 in FIG. 3. In addition, the units in the apparatus 1000 and the foregoing other operations and/or functions are separately used to implement corresponding procedures of the method 300 in FIG. 3. It should be understood that a specific process in which the units perform the foregoing corresponding steps is described in detail in the foregoing method embodiments. For brevity, details are not described herein again.

For example, the processing unit 1020 included in the apparatus 1000 may correspond to the reconstruction module and the beamforming module shown in (a) in FIG. 2.

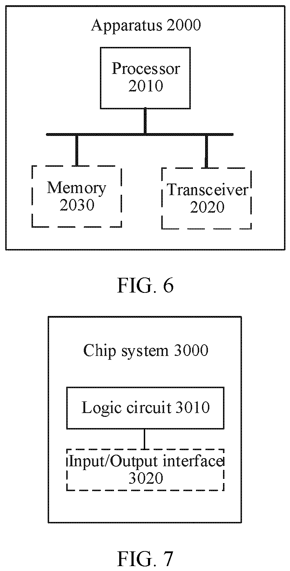

It should be further understood that, the transceiver unit 1010 in the apparatus 1000 may correspond to a transceiver 2020 in an apparatus 2000 shown in FIG. 6, and the processing unit 1020 in the apparatus 1000 may correspond to a processor 2010 in the apparatus 2000 shown in FIG. 6.

It should be further understood that, when the apparatus 1000 is a chip, the chip includes a transceiver unit and a processing unit. The transceiver unit may be an input/output circuit or a communication interface. The processing unit may be a processor, a microprocessor, or an integrated circuit that is integrated on the chip.

The transceiver unit 1010 is configured to implement a signal receiving and sending operation of the apparatus 1000, and the processing unit 1020 is configured to implement a signal processing operation of the apparatus 1000.

Optionally, the apparatus 1000 further includes a storage unit 1030, and the storage unit 1030 is configured to store instructions.

FIG. 6 is a schematic block diagram of an apparatus 2000 according to an embodiment of this application. As shown in FIG. 6, the apparatus 2000 includes at least one processor 2010. The processor 2010 is coupled to a memory, and is configured to execute instructions stored in the memory, to perform the method described in FIG. 3. Optionally, the apparatus 2000 further includes a transceiver 2020. The processor 2010 is coupled to the memory, and is configured to execute the instructions stored in the memory, to control the transceiver 2020 to send a signal and/or receive a signal. For example, the processor 2010 may control the transceiver 2020 to send first information and/or receive the first information. Optionally, the apparatus 2000 further includes a memory 2030, configured to store instructions.

It should be understood that the processor 2010 and the memory 2030 may be integrated into one processing apparatus. The processor 2010 is configured to execute program code stored in the memory 2030 to implement the foregoing functions. During specific implementation, the memory 2030 may also be integrated into the processor 2010, or may be independent of the processor 2010.

It should be further understood that the transceiver 2020 may include a receiver (or referred to as a receiver) and a transmitter (or referred to as a transmitter). The transceiver 2020 may further include an antenna. There may be one or more antennas. The transceiver 2020 may alternatively be a communication interface or an interface circuit.

When the apparatus 2000 is a chip, the chip includes a transceiver unit and a processing unit. The transceiver unit may be an input/output circuit or a communication interface. The processing unit may be a processor, a microprocessor, or an integrated circuit that is integrated on the chip.

FIG. 7 is a schematic diagram of a chip system according to an embodiment of this application. The chip system herein may also be a system including a circuit. The chip system 3000 shown in FIG. 7 includes a logic circuit 3010 and an input/output interface (input/output interface) 3020. The logic circuit is configured to be coupled to an input interface, and transmit data (for example, first information) by using the input/output interface, to perform the method described in FIG. 3.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing method may be completed by using a hardware integrated logic circuit in the processor or by using instructions in a form of software. The steps in the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware in the processor. To avoid repetition, details are not described herein.

It should be noted that, the processor in embodiments of this application may be an integrated circuit chip, and has a signal processing capability. In an implementation process, the steps in the foregoing method embodiments may be completed by using a hardware integrated logic circuit in the processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor can implement or perform the methods, the steps, and the logical block diagrams that are disclosed in embodiments of this application. The general-purpose processor may be a microprocessor, or the processor may be any conventional processor or the like.

It may be understood that, the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

According to the method provided in embodiments of this application, this application further provides a computer program product, and the computer program product includes computer program code. When the computer program code is run on a computer, the computer is enabled to perform the method in the embodiment shown in FIG. 3.

According to the method provided in embodiments of this application, this application further provides a computer-readable medium, and the computer-readable medium stores program code. When the program code is run on a computer, the computer is enabled to perform the method in the embodiment shown in FIG. 3.

According to the method provided in embodiments of this application, this application further provides a system. The system includes the foregoing first network device and second network device.

All or some of the foregoing embodiments may be implemented by using software, hardware, firmware, or any combination thereof. When software is used for implementation, the embodiments may be entirely or partially implemented in a form of a computer program product. The computer program product includes one or more computer instructions. When the computer instructions are loaded and executed on a computer, all or some of the procedures or functions according to embodiments of this application are generated. The computer instructions may be stored in a computer-readable storage medium, or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like.

In the several embodiments provided in this application, it should be understood that the disclosed system, apparatus, and method may be implemented in other manners. For example, the apparatus embodiments described above are merely examples. For example, division of the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A transmission method, comprising:

   generating, by a first network device, first information, wherein the first information indicates at least one codebook and a weighting coefficient matrix corresponding to the at least one codebook, and the at least one codebook and a weighting coefficient corresponding to the at least one codebook are used to determine a first beamforming matrix; and
   sending, by the first network device, the first information to a second network device.

**2.** The method according to claim 1, wherein the first information indicates a column vector or a row vector comprised in the at least one codebook.

**3.** The method according to claim 1 or 2, wherein the at least one codebook comprises a first codebook.

**4.** The method according to claim 1 or 2, wherein the at least one codebook comprises a first codebook and a second codebook.

**5.** The method according to any one of claims 1 to 3, wherein the first beamforming matrix comprises a first-stage matrix and a second-stage matrix, the at least one codebook comprises the first codebook and a third codebook, the weighting coefficient matrix corresponding to the at least one codebook corresponds to the first codebook, the first codebook and the weighting coefficient matrix are used to determine the first-stage matrix, and the third codebook is used to determine the second-stage matrix.

**6.** The method according to claim 1 or 2, wherein the first beamforming matrix comprises a first-stage matrix and a second-stage matrix, the at least one codebook comprises a first codebook, a second codebook, and a third codebook, the weighting coefficient matrix corresponding to the at least one codebook corresponds to the first codebook and the second codebook, the first codebook, the second codebook, and the weighting coefficient matrix are used to determine the first-stage matrix, and the third codebook is used to determine the second-stage matrix.

**7.** The method according to any one of claims 1 to 6, wherein the method further comprises: determining, by the first network device based on a second beamforming matrix and at least one codebook set, the at least one codebook and the weighting coefficient matrix corresponding to the at least one codebook, wherein the second beamforming matrix is determined based on one or more of the following: a beamforming matrix determined based on a sounding reference signal SRS measurement channel, a beamforming matrix determined based on a channel state information-reference signal CSI-RS measurement channel, a beamforming matrix determined based on a demodulation reference signal DMRS measurement channel, and a static beamforming matrix.

**8.** The method according to claim 7, wherein the determining, by the first network device based on a second beamforming matrix and at least one codebook set, the at least one codebook and the weighting coefficient matrix corresponding to the at least one codebook comprises:

projecting, by the first network device, the second beamforming matrix to the at least one codebook set, to obtain the at least one codebook and the weighting coefficient matrix corresponding to the at least one codebook that maximize a channel capacity and/or maximize a channel throughput.

**9.** The method according to any one of claims 1 to 6, wherein the method further comprises: determining, by the first network device based on a first channel matrix and at least one codebook set, the at least one codebook and the weighting coefficient matrix corresponding to the at least one codebook, wherein the first channel matrix is determined based on one or more of the following: a channel matrix determined based on an SRS measurement channel, a channel matrix determined based on a CSI-RS measurement channel, and a channel matrix determined based on a DMRS measurement channel.

**10.** The method according to claim 9, wherein the determining, by the first network device based on a first channel matrix and at least one codebook set, the at least one codebook and the weighting coefficient matrix corresponding to the at least one codebook comprises: projecting, by the first network device, the first channel matrix to the at least one codebook set, to obtain the at least one codebook and the weighting coefficient matrix corresponding to the at least one codebook that maximize a channel capacity and/or maximize a channel throughput.

**11.** The method according to any one of claims 7 to 10, wherein the at least one codebook set comprises at least one of the following: a first codebook set, a second codebook set, and a third codebook set.

**12.** The method according to any one of claims 3 to 11, wherein the first codebook, the second codebook, or the third codebook is one of the following codebooks: a spatial domain codebook, a frequency domain codebook, or an analog domain codebook.

**13.** The method according to any one of claims 1 to 12, wherein the first network device is a control device, and the second network device is a radio frequency device; or the first network device is a radio frequency device, and the second network device is a control device.

**14.** The method according to any one of claims 1 to 12, wherein the first network device is a control device, the second network device is a radio frequency device, and the method further comprises: sending, by the first network device to a third network device, information indicating the at least one codebook and the weighting coefficient matrix corresponding to the at least one codebook, wherein the third network device and the second network device belong to different cells.

15. The method according to any one of claims 1 to 12, wherein the first network device is a radio frequency device, the second network device is a control device, and the method further comprises:
performing, by the first network device, beamforming on a signal by using the first beamforming matrix.

16. A transmission method, comprising:

receiving, by a second network device, first information from a first network device, wherein the first information indicates at least one codebook and a weighting coefficient matrix corresponding to the at least one codebook, and the at least one codebook and the weighting coefficient matrix corresponding to the at least one codebook are used to determine a first beamforming matrix; and
determining, by the second network device based on the first information, the at least one codebook and the weighting coefficient matrix corresponding to the at least one codebook.

17. The method according to claim 16, wherein the first information indicates a column vector or a row vector comprised in the at least one codebook.

18. The method according to claim 16 or 17, wherein the at least one codebook comprises a first codebook.

19. The method according to claim 16 or 17, wherein the at least one codebook comprises a first codebook and a second codebook.

20. The method according to any one of claims 16 to 18, wherein the first beamforming matrix comprises a first-stage matrix and a second-stage matrix, the at least one codebook comprises the first codebook and a third codebook, the weighting coefficient matrix corresponding to the at least one codebook corresponds to the first codebook, the first codebook and the weighting coefficient matrix are used to determine the first-stage matrix, and the third codebook is used to determine the second-stage matrix.

21. The method according to any one of claims 16 to 18, wherein the first beamforming matrix comprises a first-stage matrix and a second-stage matrix, the at least one codebook comprises the first codebook, a second codebook, and a third codebook, the weighting coefficient matrix corresponding to the at least one codebook corresponds to the first codebook and the second codebook, the first codebook, the second codebook, and the weighting coefficient matrix are used to determine the first-stage matrix, and the third codebook is used to determine the second-stage matrix.

22. The method according to any one of claims 18 to 21, wherein the first codebook, the second codebook, or the third codebook is one of the following codebooks: a spatial domain codebook, a frequency domain codebook, or an analog domain codebook.

23. The method according to any one of claims 16 to 22, wherein the first network device is a control device, and the second network device is a radio frequency device; or the first network device is a radio frequency device, and the second network device is a control device.

24. The method according to any one of claims 16 to 23, wherein the first network device is a radio frequency device, the second network device is a control device, and the method further comprises:
sending, by the second network device to a fourth network device, information indicating the at least one codebook and the weighting coefficient matrix corresponding to the at least one codebook, wherein the fourth network device and the first network device belong to different cells.

25. The method according to any one of claims 16 to 23, wherein the first network device is a control device, the second network device is a radio frequency device, and the method further comprises:

determining, by the second network device, the first beamforming matrix based on the first information; and
performing, by the second network device, beamforming on a signal by using the first beamforming matrix.

26. A communication apparatus, comprising at least one processor, wherein the at least one processor is configured to: be coupled to a memory, and read and execute instructions in the memory to implement the method according to any one of claims 1 to 25.

27. The communication apparatus according to claim 26, further comprising the memory.

28. A communication apparatus, comprising a unit configured to implement the method according to any one of claims 1 to 25.

29. A computer program product comprising instructions, wherein when the computer program product is run on a computer, the computer is enabled to perform the method according to any one of claims 1 to 25.

30. A computer-readable storage medium, wherein the computer-readable storage medium stores a computer program, and when the computer program is executed, the method according to any one of claims 1 to 25 is performed.

31. A system, comprising a first network device and a second network device, wherein the first network device is configured to perform the method according to any one of claims 1 to 15, and the second network device is configured to perform the method according to any one of claims 16 to 25.

First network device

Calculation module

Second network device

Beamforming module

(a)

First network device

Calculation module

Beamforming module

Second network device

(b)

FIG. 1

First network device

Generation module

Calculation module | Quantization module

Second network device

Reconstruction module | Beamforming module

(a)

First network device

Calculation module | Quantization module | Generation module

Beamforming module | Reconstruction module

Second network device

(b)

FIG. 2

First network device

Second network device

S310: Generate first information, where the first information indicates at least one codebook and a weighting coefficient matrix corresponding to the at least one codebook

S320: First information

S330: Determine, based on the first information, the at least one codebook and the weighting coefficient matrix corresponding to the at least one codebook

FIG. 3

BBH

First information →

BBL 1

First information →

BBL 2

(a)

DU 1
BBH 1

First information →

BBL 1

CU 1

CU 2

First information →

BBH 2

First information →

BBL 2

DU 2

(b)

FIG. 4

Apparatus 1000

Transceiver unit 1010

Processing unit 1020

Storage unit 1030

FIG. 5

Apparatus 2000

Processor
2010

Memory
2030

Transceiver
2020

FIG. 6

Chip system 3000

Logic circuit 3010

Input/Output interface
3020

FIG. 7

## INTERNATIONAL SEARCH REPORT

| International application No. |
|---|
| **PCT/CN2023/070017** |

**A. CLASSIFICATION OF SUBJECT MATTER**

H04B7/0456(2017.01)i

According to International Patent Classification (IPC) or to both national classification and IPC

**B. FIELDS SEARCHED**

Minimum documentation searched (classification system followed by classification symbols)

IPC:H04B; H04W

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, 3GPP, CNKI: 加权系数, 码本, 指示, 基带处理, 高层, 低层, codebook, indicate, index, weight, matrix, BBH, BBL

**C. DOCUMENTS CONSIDERED TO BE RELEVANT**

| Category* | Citation of document, with indication, where appropriate, of the relevant passages | Relevant to claim No. |
|---|---|---|
| PX | CN 114710188 A (HUAWEI TECHNOLOGIES CO., LTD.) 05 July 2022 (2022-07-05) description, paragraphs [0094]-[0273] | 1-31 |
| PX | CN 114142899 A (COMBA NETWORK SYSTEMS CO., LTD.) 04 March 2022 (2022-03-04) description, paragraphs [0005]-[0236] | 1-31 |
| X | CN 111865377 A (HUAWEI TECHNOLOGIES CO., LTD.) 30 October 2020 (2020-10-30) description, paragraphs [0061]-[0356] | 1-31 |
| X | CN 108023624 A (HUAWEI TECHNOLOGIES CO., LTD.) 11 May 2018 (2018-05-11) description, paragraphs [0046]-[0183] | 1-31 |
| A | US 2016353290 A1 (TELEFONAKTIEBOLAGET LM ERICSSON (PUBL)) 01 December 2016 (2016-12-01) entire document | 1-31 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 April 2023** | **26 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/070017**

| Patent document cited in search report | | | Publication date (day/month/year) | Patent family member(s) | | | Publication date (day/month/year) |
|---|---|---|---|---|---|---|---|
| CN | 114710188 | A | 05 July 2022 | None | | | |
| CN | 114142899 | A | 04 March 2022 | CN | 114142899 | B | 26 August 2022 |
| CN | 111865377 | A | 30 October 2020 | WO | 2020221118 | A1 | 05 November 2020 |
| CN | 108023624 | A | 11 May 2018 | US | 2019260453 | A1 | 22 August 2019 |
| | | | | US | 10924174 | B2 | 16 February 2021 |
| | | | | JP | 2019537874 | A | 26 December 2019 |
| | | | | EP | 3506522 | A1 | 03 July 2019 |
| | | | | EP | 3506522 | A4 | 31 July 2019 |
| US | 2016353290 | A1 | 01 December 2016 | US | 9615263 | B2 | 04 April 2017 |
| | | | | WO | 2016189498 | A1 | 01 December 2016 |

Form PCT/ISA/210 (patent family annex) (July 2022)

**EP 4 472 095 A1**

**Patent documents cited in the description**

- CN 202210191609